# EUROPEAN PATENT SPECIFICATION

(11) **EP 3 360 610 B1**
(45) Date of publication and mention of the grant of the patent: **25.08.2021**
(21) Application number: 17155697.0
(22) Date of filing: 10.02.2017
(51) Int. Cl.: B01D 46/00, B01D 46/10, B01D 46/48, B08B 1/00, F24F 3/16

(54) **A FILTER CLEANING DEVICE FOR AN AIR-CONDITIONER**
FILTERREINIGUNGSVORRICHTUNG FÜR EINE KLIMAANLAGE
DISPOSITIF DE NETTOYAGE DE FILTRE POUR UN CLIMATISEUR

(43) Date of publication of application: 15.08.2018
(73) Proprietor: Daikin Industries, Ltd., Osaka-shi, Osaka 530-8323 (JP); Daikin Europe N.V., 8400 Oostende (BE)
(72) Inventor: NAGAOKA, Shinji, 301 00 Plzen Skvrnany (CZ); STOZICKY, Jan, 301 00 Plzen Skvrnany (CZ)
(74) Representative: Global IP Europe Patentanwaltskanzlei

(56) References cited:
- EP-A1- 2 312 230
- WO-A1-2010/143230
- WO-A1-2011/027419
- JP-A- 2009 106 908
- US-A1- 2011 299 043
- US-A1- 2011 299 045

## Description

### Field of the Invention

The present invention relates to filter cleaning device for an air-conditioner.

### Background

Air-conditioners are generally installed with a filter for filtration of the air to be conditioned. The filter needs to be cleaned on a regular basis. The air-conditioners with a filter cleaning function are disclosed in JP 2005-155954 A, JP 2001-099479 A, JP H07-275626 A and JP 2013-148233 A.

JP 2005-155954 A discloses a wall-mounted type air-conditioner which has a fixedly mounted dust box and a slidably mounted filter in a housing. The dust box is formed so as to sandwich the filter at lower end of the filter at a normal position, and has a brush arranged so as to be in contact with the filter inside the dust box. The filter is driven to move downward and outward through an insertion/extraction opening formed in the housing while passing through the dust box in a filter-cleaning mode. By this, dust, fibres, particulate matter or the like (hereinafter simply referred to as "particles") are removed from the filter by the brush and accumulated in the dust box.

JP 2001-099479 A discloses a wall-mounted type air-conditioner which has a dust box formed in a side wall of a housing and an endless filter belt rotatably wound over an upper axial rod and a lower axial rod in the housing. The dust box is formed so as to surround the lower axial rod from the below, and has a brush arranged so as to be in contact with the filter belt inside the dust box. The filter belt is driven to rotate while passing through the dust box. By this, particles are removed from the filter belt by the brush and accumulated in the dust box.

JP H07-275626 A discloses a filter cleaning device for an air-conditioner, which has an endless filter belt, a brush and a dust box. The filter belt is rotatably wound over a left axial rod and a right axial rod in a housing. The brush is arranged in the housing so as to be in contact with the filter belt at the left axial rod. The dust box is attached to the lower-outside of a housing at a position right below the brush with an opening towards the brush. The filter belt is driven to rotate while being in contact with the brush. By this, particles are removed from the filter belt by the brush and accumulated in the dust box.

JP 2013-148233 A discloses a wall-mounted type air-conditioner which has a detachably mounted dust box and a slidably mounted filter in a housing. The dust box is formed so as to sandwich the filter at lower end of the filter at a normal position, and has a brush arranged so as to be in contact with the filter inside the dust box. The filter is driven to move from a front side to a rear side in the housing while passing through the dust box in a filter-cleaning mode. By this, particles are removed from the filter by the brush and accumulated in the dust box

WO 2010/143230 A1 discloses a filter cleaning device for an air-conditioner, comprising: a flat filter having a filter surface and configured to pass an air flow through the filter surface; a brush unit having a brush and a storage member, the brush being configured to contact with the filter surface, and the storage member being disposed under the brush, configured to receive particles falling from the brush, and forming a bottom surface of the brush unit; a driving unit configured to move the brush unit such that a relative position of the brush relative to the filter moves along a first moving axis which extends substantially horizontally and along the filter surface; a controller configured to control the driving unit such that the relative position of the brush unit moves from one end side to the other end side of the filter with respect to the first moving axis; and a housing accommodating the filter, the brush unit and the driving unit, a first hole being formed within a bottom surface of the housing; wherein the filter is fixed to a position with respect to the housing, and the housing is configured such that the first hole is formed at a first position adjacent to one end side of the filter with respect to the first moving axis.

A discharging operation needs to be performed before the amount of the accumulated particles exceeds the accumulation capacity of the dust box. The discharging operation is an operation for discharging the accumulated particles from the dust box. Meanwhile, to perform the discharge operation at short intervals would take a lot of time and labour and limit the time of the air-conditioning operation. Thus, it is desirable to allow an operator, such as a maintenance person or a cleaning personal, to perceive an appropriate timing for particle evacuation.

In this regard, it is disclosed in JP 2001 099479 (A) to configure the housing openable and provide an observation window made of a transparent material to the upper side of the dust box. It is disclosed in JP 2001-099479 A to provide an observation window made of a transparent material to the dust box in a part which forms the side wall of the housing. It is disclosed in JP H07-275626 A to form the dust box with a transparent material. It is disclosed in JP 2013-148233 A to configure the housing openable provide an observation window made of a transparent material to the side wall of the dust box.

With such configurations, the operator can observe directly by his eyes whether the dust box is almost full with particles to easily perceive an appropriate timing for particle evacuation.

Incidentally, so called ceiling-mounted duct type air conditioners are widely employed in different buildings, particularly in commercial premises such as offices and hotels. The ceiling-mounted duct type air conditioner is an air conditioner which is concealed behind a ceiling and intakes and supplies air via ducts. It is also desirable for the ceiling-mounted duct type air conditioners to allow the operator to easily perceive an appropriate timing for particle evacuation.

However, none of the above-mentioned conventional configurations does not fulfil such a demand. The configurations disclosed in JP 2005-155954 A, JP 2001-099479 A and JP 2013-148233 A are for a wall-mounted type air-conditioner, and thus the observation windows would be useless when the air-conditioner is concealed behind a ceiling. Although the ceiling may have an inspection door, it would be troublesome to thrust his head into the in-ceiling space through the inspection door to see the observation window from the side or the above. The configuration disclosed in JP H07-275626 A would be inappropriate for the ceiling-mounted duct type air conditioners, because the downward protrusion of the dust box would cause an increase in the height of the air-conditioner while the in-ceiling space has a limitation in height in most cases.

### Summary

The object of the present invention is to provide a filter cleaning device for an air-conditioner that allows an operator to easily perceive an appropriate timing for particle evacuation even in a case that the air-conditioner is ceiling-mounted duct type.

A first aspect of the present invention provides a filter cleaning device for an air-conditioner as defined in claim 1. The filter cleaning device comprises a flat filter, a brush unit, a driving unit, a controller and a housing. The flat filter has a filter surface and configured to pass an air flow through the filter surface. The brush unit has a brush which is configured to contact with the filter surface, and a storage member which is of a transparent material, disposed under the brush, configured to receive particles falling from the brush, and forms a bottom surface of the brush unit. The driving unit is configured to move the filter and brush unit relative to each other such that a relative position of the brush relative to the filter moves along a first moving axis which extends substantially horizontally and along the filter surface. The controller is configured to control the driving unit such that the relative position of the brush unit moves from one end side to the other end side of the filter with respect to the first moving axis. The housing accommodates the filter, the brush unit and the driving unit, a first hole being formed within a bottom surface of the housing. The housing is configured such that the first hole is formed at a first position adjacent to one end side of the filter with respect to the first moving axis. The housing and storage member are formed such that the first hole of the housing is to be closed with the bottom surface of the storage member. The controller is configured to control the driving unit such that the storage member is located directly over the first hole in non-use state of the filter cleaning device.

The first moving axis maybe a linear line or a curved line along which the filter and brush unit can slide relative to each other. In practice, it is preferable to arrange a pair of guide rails which extend along the filter surface and guide the filter and/or brush unit.

The brush unit is located directly over the first hole of the housing when the filter cleaning device is in non-use. Thereby, it is unlikely that the particles such as dust and particulate matters stored in the storage member are stirred up and/or come out of the storage member when the filter cleaning device is in non-use.

The shape and area size of the first hole correspond to the shape and area size of the bottom surface of the storage member. Thereby, the first hole can be closed by the storage member within the brush unit which is located at the first position of the housing. Preferably, the area size of the bottom surface of the storage member is large enough to close the first hole. The shape of the bottom surface of the storage member may exactly correspond to the shape of the first hole. In other words, both may fit with each other with no gap. Thereby, the particles in the storage member can be securely prevented from being stirred up and coming out of the storage member.

The brush unit moves along the filter surface. In this case, the first position is preferably a parking position of the brush unit when the filter cleaning device is in non-use state. Furthermore preferably, the brush unit parks at the side of the filter within a space for accommodating electronic circuits and cables of the air-conditioner. Thereby, the entire size of the air-conditioner can stay the same.

The above configuration enables the operator to observe directly by his eyes whether the storage member is already full with particles. The filter cleaning device enables him to do so just by opening a ceiling hatch, provided the first position of the housing is located over the ceiling hatch. Furthermore, the above configuration of the filter cleaning device can be attachable to an air-conditioner without enlarging the air-conditioner.

According to a preferred embodiment of the filter cleaning device mentioned above, the storage member and housing are configured such that the storage member located at the first position closes the first hole by the bottom surface of the storage member.

Preferably, the area size of the bottom surface of the storage member is large enough to cover the first hole. In other words, a peripheral portion of the housing surrounding the first hole preferably overlaps the bottom surface of the storage member. Thereby, the first hole can be securely closed by the bottom surface of the storage member when the brush unit is located directly over the first hole. Furthermore, it is not necessary to arrange a transparent window to cover the first hole. Thereby, the filter cleaning device can be manufactured at lower cost with more simple processes.

With the above configuration, the first hole is covered with a transparent window. Particles stored in the storage member are even more prevented from being raised up and/or coming out of the storage member.

According to another preferred embodiment of any one of the filter cleaning device mentioned above, the first position is located at the vicinity of one end side of the housing with respect to the first moving axis.

Taking an example, the filter surface extends vertically and the brush moves horizontally relative to the filter. Preferably, the first hole is formed at a position adjacent to one end side of the filter without overlapping the filter with respect to the width direction of the filter. Thereby, the air channel can be fully maintained even when the brush unit is located over the first hole.

According to another preferred embodiment of any one of the filter cleaning device mentioned above, the brush extends from one end side to the other end side of the filter with respect to a direction intersecting the first moving axis.

The configuration above enables the brush to clean up the filter surface by moving along the first moving direction. Thereby, the driving mechanism of the filter cleaning device can be simplified. Taking an example, the filter surface extends vertically and the brush moves horizontally relative to the filter. The brush substantially vertically extends from the top end to the bottom end of the filter.

According to the invention, the filter is fixed to a position with respect to the housing, and the driving unit is configured to move the brush unit.

Taking an example, the filter surface extends vertically and the brush moves horizontally. Preferably, the driving unit horizontally moves the brush unit from a first end side to a second end side of the filter. Furthermore preferably, the driving unit moves back the brush unit from the second end side to the first end side of the filter. After reaching to the first end side of the filter, the driving unit parks the brush unit at the first position adjacent to the first end side of the filter.

Such a driving unit preferably includes a motor, gears coupling to an output shaft of the motor, a pair of guide rails engaging with the gears and horizontally guiding the brush unit. Such a configuration generally enables downsizing of the filter cleaning device in an easier manner comparing to moving the filter with respect to the brush unit.

According to further another preferred embodiment of any one of the filter cleaning device mentioned above, the driving unit is further configured to rotate the brush about a rotation axis that extends along the filter surface and intersects with the first moving axis.

The cleaning effect of the filter can be enhanced by the rotation of the brush comparing to the case in that the filter is just swept by a fixed brush.

According to further another preferred embodiment of any one of the filter cleaning device mentioned above, the brush unit further has a comb-like member, and the comb-like member is configured to comb bristles of the brush.

The comb-like member is preferably disposed to comb bristles of the brush. Thereby, particles such as dusts are removed away from the bristles. Preferably, the comb-like member has a comb body and teeth aligned on the comb body. The comb body is disposed such that the teeth reach to a certain depth in the bristles of the brush.

According to further another preferred embodiment of any one of the filter cleaning device mentioned above, the housing is configured such that a second hole is formed within a wall of the housing, and the storage member is configured such that a space defined by the storage member communicates with an outside space of the housing via the second hole in a case that the brush unit is located at the first position.

The configuration above enables the operator to vacuum out the space within the storage member via the second hole. There is no need for him to remove the storage member and/or brush unit from the housing to empty the storage member. Preferably, the second hole is formed within one of the side walls defining the housing. With this configuration, the operator can easily access to the second hole even when the filter cleaning device is placed on a floor for overhaul or maintenance.

A second aspect of the present invention provides an air-conditioner having the filter cleaning device mentioned above.

### Brief Description of the Drawings

Fig. 1 is a schematic view indicating an installation state of the inner air-conditioning unit according to an embodiment of the present invention.
Fig. 2 is a top perspective view of an inner air-conditioning unit according to the present embodiment.
Fig. 3 is a front view of a filter cleaning device according to the present embodiment.
Fig. 4 is a side view of the filter cleaning device according to the present embodiment.
Fig. 5 is a partial top perspective view of the filter cleaning device according to the present embodiment.
Fig. 6 is a top perspective view of a cleaning unit according to the present embodiment.
Fig. 7 is a top perspective view of a brush unit according to the present embodiment.
Fig. 8 is a top perspective view of a cylinder unit according to the present embodiment.
Fig. 9 is a partial horizontal cross-sectional view of the filter cleaning device according to the present embodiment.
Fig. 10 is a schematic top view of the filter cleaning device according to the present embodiment, indicating a movement of the cleaning unit.
Fig. 11 is a schematic side view of the filter cleaning device according to the present embodiment, indicating the movement of the cleaning unit.
Fig. 12 is a partial vertical cross-sectional view of the filter cleaning device according to the present embodiment, indicating transfer of particles
Fig. 13 is a bottom perspective view of the brush unit according to the present embodiment.
Fig. 14 is a partial bottom perspective view of the inner air-conditioning unit according to the present embodiment.
Fig. 15 is a partial bottom plan view of the filter cleaning device according to the present embodiment.
Fig. 16 is a block diagram indicating a functional configuration of an air conditioner according to the present embodiment.
Fig. 17 is a flow chart indicating a process performed by a filter cleaning controller according to the present embodiment.
Fig. 18 is a flow chart indicating a cleaning operation according to the present embodiment.

### Detailed Description of Preferred Embodiments

An air-conditioner including a filter cleaning device according to a preferred embodiment of the present invention will be described with reference to the drawings.

### Overview of Configuration of Air Conditioner

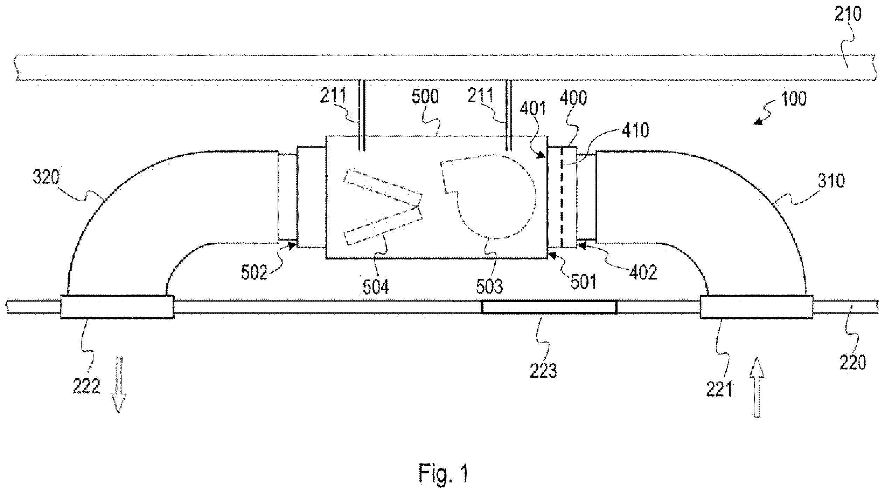

Fig. 1 is a schematic view indicating an installation state of the air conditioner. The air conditioner is included in an inner air-conditioning unit of an air-conditioning system.

The inner air-conditioning unit 100 is arranged between a building slab 210 and a false ceiling 220. The inner air-conditioning unit 100 comprises an air inlet duct 310, a filter cleaning device 400, an air-conditioner body 500 and an air outlet duct 320.

The air-conditioner body 500 has an air inlet port 501 and an air outlet port 502 which are formed on opposite outer sides of the air-conditioner body 500, respectively. The air-conditioner body 500 is hung from the building slab 210 behind the false ceiling 220 by hanging members 211. The air-conditioner body 500 is fixed in a state where two opposite sides thereof are parallel to a horizontal plane and the rest four sides thereof are perpendicular to the horizontal plane. The air inlet port 501 and the air outlet port 502 are positioned on the laterally opposite sides.

The air-conditioner body 500 has a fan 503 and a heat exchanger 504 inside. The fan 503 is configured to induce an internal airflow going from the air inlet port 501 to the air outlet port 502 through the heat exchanger 504. The heat exchanger 504 is configured to heat and/or cool the air passing through the heat exchanger 504. Thus, a main air-flow in the filter cleaning device 400 goes from the air inlet port 501 to the air outlet port 502.

The air-conditioner body 500 is attached with the filter cleaning device 400 at the air inlet port 501 by means of a flange coupling or the like (not shown). The filter cleaning device 400 has a rectangular tubular shape with short length. The filter cleaning device 400 has a body side port 401 and a duct side port 402 which are formed on opposite ends of the rectangular tubular shape. The filter cleaning device 400 has a filter (a flat filter) 410 positioned at between the body side port 401 and the duct side port 402. The filter 410 is configured to allow the air to pass through from the body side port 401 to the duct side port 402 while filtrating the air. The body side port 401 is connected to the air inlet port 501 of the air-conditioner body 500. Thus, a main air-flow in the air-conditioner body 500 goes from the duct side port 402 to the body side port 401.

The filter cleaning device 400 and the air-conditioner body 500 may be produced as a unit, or assembled to be put together after individually manufactured. The filter cleaning device 400 and the air-conditioner body 500 may be taken as an "air-conditioner."

The air inlet duct 310 connects an inlet grating 221 formed in the false ceiling 220 and the duct side port 402 of the filter cleaning device 400. Hence, the air inlet port 501 of the air-conditioner body 500 leads to, via the filter cleaning device 400, the air inlet duct 310 and the inlet grating 221, a space to which the inlet grating 221 is exposed. In addition, the air outlet duct 320 connects the air outlet port 502 of the air-conditioner body 500 and an outlet grating 222 formed in the false ceiling 220. Hence, the air outlet port 502 of the air-conditioner body 500 leads to, via the air outlet duct 320 and the outlet grating 222, a space to which the outlet grating 222 is exposed.

The fan 503 has a capacity high enough to make a continuous air flow from the inlet grating 221 to the outlet grating 222. Thus, the inner air-conditioning unit 100 can supply a heated/cooled air, i.e. perform air-conditioning. Moreover, the air passes the filter 410 in the filter cleaning device 400. Thus, the inner air-conditioning unit 100 is capable of not only suppling a clean air to the space to be air-conditioned but also avoiding the parts of the air-conditioner body 500, particularly the heat exchanger 504, from being soiled and clogged.

The inner air-conditioning unit 100 is concealed behind the false ceiling 220. Therefore, an inspection door 223 is provided on the false ceiling 220 for a purpose of maintenance of the inner air-conditioning unit 100. In this embodiment, the inspection door 223 is positioned directly under the filter cleaning device 400 and the air-conditioner body 500.

In this embodiment, the terms related to directions are to be interpreted as follows, unless otherwise specified. The terms indicating linear directions pertinent to the inner air-conditioning unit 100 are the linear directions in a case where the inner air-conditioning unit 100 is in use. The term "width" is the length in a direction which is horizontal and perpendicular to the main air-flow direction in the filter cleaning device 400. The term "height" is the length in a direction which is vertical and perpendicular to the main air-flow direction in the filter cleaning device 400. The term "depth" is the length in a direction which is horizontal and parallel to the main air-flow direction in the filter cleaning device 400. The terms "left" and "right" are the left and the right in a horizontal direction when viewed from the upstream side of the main air-flow in the filter cleaning device 400. The term "side" is the side in a horizontal direction with respect to the main air-flow direction in the filter cleaning device 400. The terms indicating rotation directions are the rotation directions when viewed from the above in a case where the inner air-conditioning unit 100 is in use. The configurations explained in this embodiment may be horizontally flipped in the width direction. Therefore, the terms "left" and "right" and the terms "clockwise" and "counterclockwise" in this embodiment may be respectively interchanged.

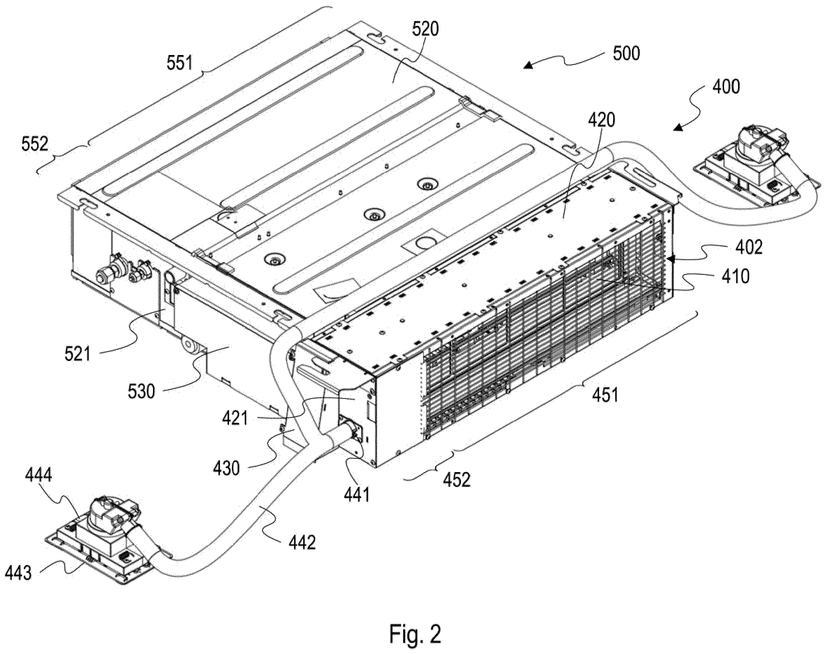

Fig. 2 is a top perspective view of the air conditioner comprising the filter cleaning device 400 and the air-conditioner body 500.

The air-conditioner body 500 comprises an air-conditioner housing 520 having a substantially cuboid shape. The height of the air-conditioner housing 520 is smaller than either the width and the depth of the air-conditioner housing 520. In other words, the air-conditioner body 500 is configured so as to ensure an internal space large enough to accommodate necessary elements by a horizontally wide and vertically narrow shape. The air-conditioner body 500 is also configured so as to ensure opening spaces of the air inlet port 501 and the air outlet port 502 large enough to intake and outlet the air with small friction loss by the horizontally wide and vertically narrow shape. Since the height is suppressed, the air-conditioner body 500 is applicable to the in-ceiling space having a limitation in height.

The air-conditioner body 500 comprises a body-side control box 530 mounted on an outer surface of a body side wall 521 which is one of the side walls of the air-conditioner housing 520. In this embodiment, the body side wall 521 is the left side wall of the air-conditioner housing 520.

The body-side control box 530 includes an arithmetic circuit such as a CPU (Central Processing Unit), a work memory used by the CPU, such as a RAM (Random Access Memory), and a recording medium storing control programs and information used by the CPU, such as a ROM (Read Only Memory), although they are not shown. The body-side control box 530 is configured to receive an electric power supply from an external power source. The body-side control box 530 is connected to each of the electronic elements mounted on the air-conditioner body 500 via power-supply cables and/or control cables (not shown). Thus, the body-side control box 530 is configured to perform information processing and signal processing to control the operation of the air-conditioner body 500 by the CPU executing the control programs, so as to achieve the functions of the filter cleaning device 400.

In the vicinity area of the body-side control box 530, including the interior space of air-conditioner housing 520, a lot of cables are arranged. Therefore, the air inlet port 501 (see Fig. 1), the air channel (not shown) in the air-conditioner body 500, and the air outlet port 502 (see Fig. 1) are formed closer to another side wall (not shown) than the body side wall 521. The other side wall is one of the walls of the air-conditioner housing 520, which is opposite to the body side wall 521. Thus, the air-conditioner body 500 has a chamber area 551 and a wiring area 552. The chamber area 551 is a width range which lets through the air for air-conditioning. The wiring area 552 is a width range which does not let through the air for air-conditioning.

The filter cleaning device 400 comprises a device housing 420 having a substantially cuboid shape. The height and width of the device housing 420 are substantially the same as the height and width of the air-conditioner housing 520 of the air-conditioner body 500. By this, the filter cleaning device 400 is also applicable to the in-ceiling space having a limitation in height.

The duct side port 402, the filter 410 and the body side port 401 (see Fig. 1) have substantially the same width range as the width range of the air inlet port 501 of the air-conditioner body 500, i.e. the chamber area 551 of the air-conditioner body 500. Thus, the filter cleaning device 400 has a filtering area 451 and a non-filtering area 452. The filtering area 451 is a width range which lets through the air for air-conditioning. The non-filtering area 452 is a width range which does not let through the air for air-conditioning.

The filter cleaning device 400 comprises a device-side control box 430 mounted on an outer surface of a device side wall 421. The device side wall 421 is one of the side walls of the device housing 420, which is on the same side as the body-side control box 530 of the air-conditioner body 500 in the width direction.

The device-side control box 430 includes an arithmetic circuit such as a CPU, a work memory used by the CPU, such as a RAM, and a recording medium storing control programs and information used by the CPU, such as a ROM, although they are not shown. The device-side control box 430 is configured to receive an electric power supply from an external power source or the body-side control box 530 of the air-conditioner body 500. The device-side control box 430 is connected to each of the electronic elements mounted on the filter cleaning device 400 via power-supply cables and/or control cables (not shown). Thus, the device-side control box 430 is configured to perform information processing and signal processing to control the operation of the filter cleaning device 400 by the CPU executing the control programs, so as to achieve the functions of the filter cleaning device 400.

The filter 410 of the filter cleaning device 400 is configured to filter out the particles from the air for air-conditioning. The filtered-out particles adhere to the filter 410 on the upstream side. The amount of the adhering particles increases as an air-conditioning operation, which is an operation for air-conditioning, is performed longer. This causes an increase in a friction loss of the air flow, resulting in a deterioration of the air-conditioning performance of the inner air-conditioning unit 100.

For avoiding such a performance deterioration, the filter cleaning device 400 has a filter cleaning function. The filter cleaning device 400 comprises a cleaning unit (not shown) which is configured to remove the particles adhering to the filter 410 and to accumulate the removed particles inside. The configuration of the cleaning unit will be detailed later. The cleaning unit is controlled to move along the width direction (a first moving axis which extends substantially horizontally and along the filter surface) and park at a predetermined parking position within the above-mentioned non-filtering area (hereinafter referred to as "the parking area") 452.

The amount of the accumulated particles increases as the air-conditioning operation is performed longer while performing a cleaning operation at intervals. The cleaning operation is an operation for cleaning the filter 410 by the cleaning unit. To avoid the amount of the accumulated particles exceeds the accumulation capacity of the cleaning unit, the filter cleaning device 400 has a particle-evacuation function. The filter cleaning device 400 comprises an exhaust opening (a second hole) 441, a hose 442 and a suction socket 443.

The exhaust opening 441 is an opening formed on the device side wall 421, having a cylindrical element projecting inwardly and outwardly from the device side wall 421. The exhaust opening 441 is configured to lead to the internal space of the cleaning unit when the cleaning unit is at the parking position. The hose 442 is connected to the cylindrical element of the exhaust opening 441. The suction socket 443 has a front-side part (not shown) and a back-side part 444. The front-side part is arranged on the surface of the false ceiling 220 so as to be exposed. The hose 442 is connected to the back-side part 444 facing the in-ceiling space. The front-side part is formed with an aperture (not shown) which is configured to lead to the hose 442 through the back-side part 444.

Thus, the aperture of the suction socket 443 leads to the internal space of the cleaning unit via the hose 442 and the exhaust opening 441. With this configuration, the particles accumulated in the cleaning unit can be easily removed by the operator using a vacuum cleaner attached to the suction socket 443 to suck out the particles.

As shown in Fig. 2, two or more sets of the hose 442 and the suction socket 443 may be connected to the exhaust opening 441. The suction socket 443 may be arranged on a false wall, a false floor or the like (not shown).

### Configuration of Filter Cleaning Device

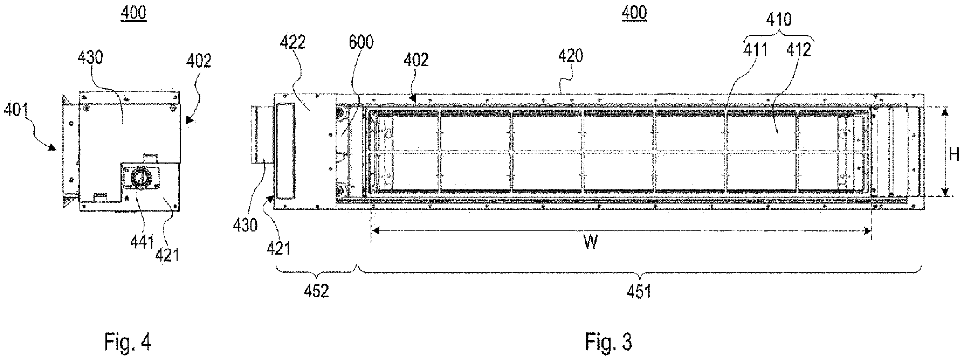

Fig. 3 is a front view of the filter cleaning device 400. Here, Fig. 3 shows the state where the cleaning unit is parking at the parking position. Fig. 4 is a side view of the filter cleaning device 400 shown in Fig. 3.

The filter 410 comprises a filter frame 411 and a mesh sheet (a filter surface) 412. The filter frame 411 extends over the filtering area 451 in parallel to both the width direction and the height direction. The filter frame 411 has a plurality of vertical ribs and a plurality of horizontal ribs. The mesh sheet 412 is fixed to the entirety of the filter frame 411. Thus, the filter 410 has a longitudinal and flat shape perpendicular to the main air-flow direction, having a width W and a height H. In this embodiment, the height H is smaller than the width W. The filter frame 411 and the mesh sheet 412 are, for example, made of plastic material. The mesh sheet 412 is fixed to the filter frame 411 by means of moulding or the like.

The body side port 401 (see Fig. 1), the filter 410, the duct side port 402 and the air inlet duct 310 (see Fig. 1) are formed in approximately the same size and the same position when seen from the main air-flow direction. This means that the duct side port 402 is narrower than the device housing 420 in the width direction. Thus, the device housing 420 has a cover wall 422 which covers the rest part of the upstream side of the device housing 420.

The width of the cleaning unit 600 is narrower than the width of the parking area 452. Therefore, the cleaning unit 600 does not interfere the air flow in the filtering area 451 at least when the cleaning unit 600 is at the parking position in the parking area 452.

Moreover, the parking area 452 is arranged in an area corresponding to the wiring area 552 of the air-conditioner body 500 in the width direction. The device-side control box 430 is also arranged in an area corresponding to the body-side control box 530 of the air-conditioner body 500 (see Fig. 2) in the width direction. Therefore, it is not necessary to increase the width and/or the height of the air-conditioner (the filter cleaning device 400 and the air-conditioning body 500) for the filter cleaning function.

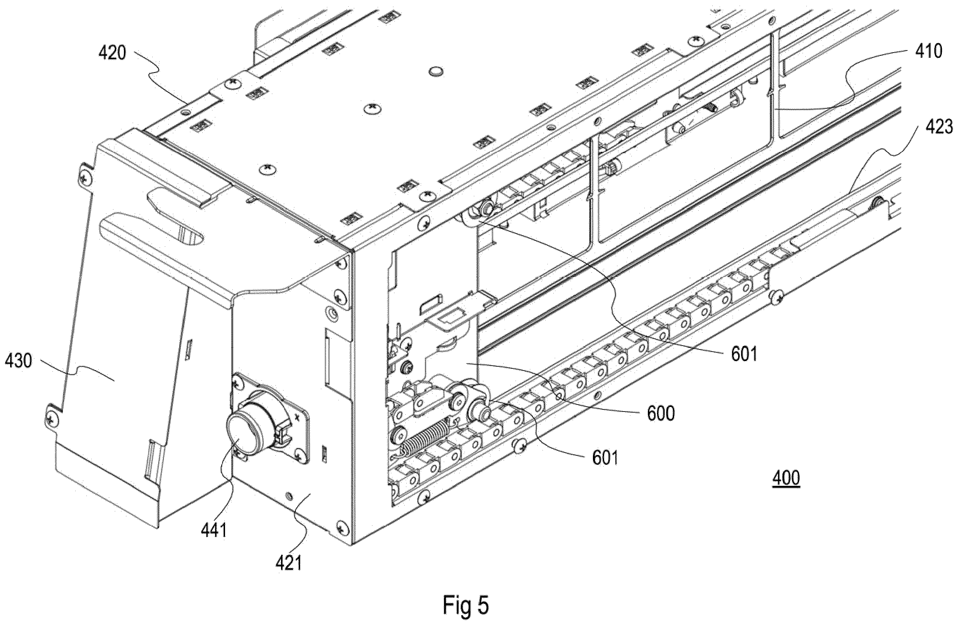

Fig. 5 is a partial top perspective view of the filter cleaning device 400, with some parts (in particular, the cover wall 422) omitted.

The filter cleaning device 400 comprises a plurality of guide rails 423 and a plurality of racks (not shown). Both the guide rails 423 and the racks are arranged in the device housing 420 on both sides of the filter 410 in parallel with the filter 410, extending in the width direction over the width range of the device housing 420. The guide rails 423 are arranged at four corners of the device housing 420 and projecting vertically towards the vertical centre of the device housing 420, respectively. The racks are arranged close to upper the guide rails 423 and projecting horizontally towards the horizontal centre of the device housing 420, respectively.

The cleaning unit 600 is configured to engage with the guide rails 423 and the racks so as to slide in the width direction by utilizing the guide rails 423 and the racks. The cleaning unit 600 comprises a plurality of wheels 601 and a plurality of pinion gears (not shown).

The wheels 601 are freely rotatably fixed to the outer surface of the cleaning unit 600. The wheels 601 are configured to mesh with the guide rails 423 such that the attitude and the movement of the cleaning unit 600 are stabilized in a linear traveling along the filter 410. The pinion gears are rotatably fixed to the outer surface of the cleaning unit 600. The pinion gears are configured to mesh with the racks and be rotated by motors (not shown) such that the cleaning unit 600 moves along the filter 410. The motors are controlled by the device-side control box 430 such that the cleaning unit 600 travels in the width direction along the filter 410 under control. The cleaning unit 600 is preferably configured to exert a pressure on each of the wheels 601 towards the corresponding guide rail 423 by means of springs or the like so as to ensure engagements between the wheels 601 and the guide rails 423.

### Configuration of Cleaning Unit

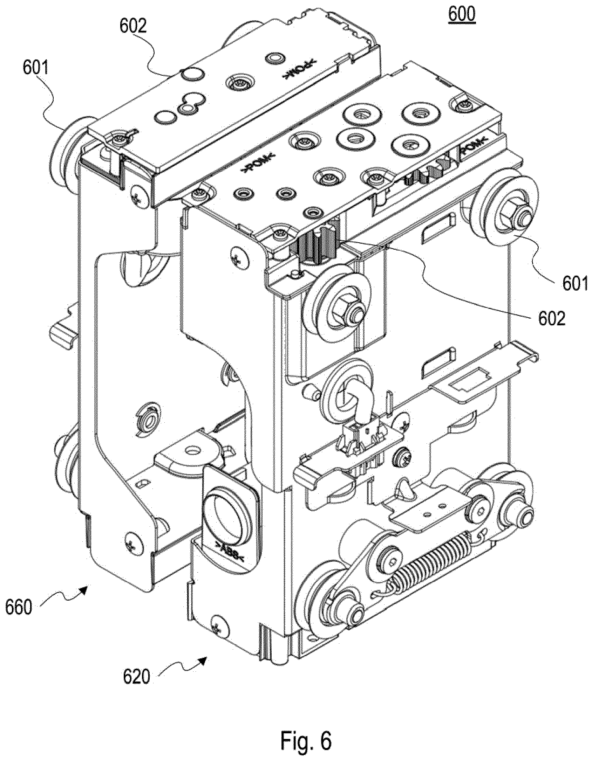

Fig. 6 is a top perspective view of the cleaning unit 600.

The cleaning unit 600 comprises a brush unit 620 and a cylinder unit 660. The brush unit 620 and the cylinder unit 660 are respectively arranged on opposite sides of the filter 410 with a predetermined distance. In other words, the brush unit 620 and the cylinder unit 660 are configured to sandwich the filter 410 therebetween. The wheels 601 and the pinion gears 602 mentioned above are provided to each of the brush unit 620 and the cylinder unit 660.

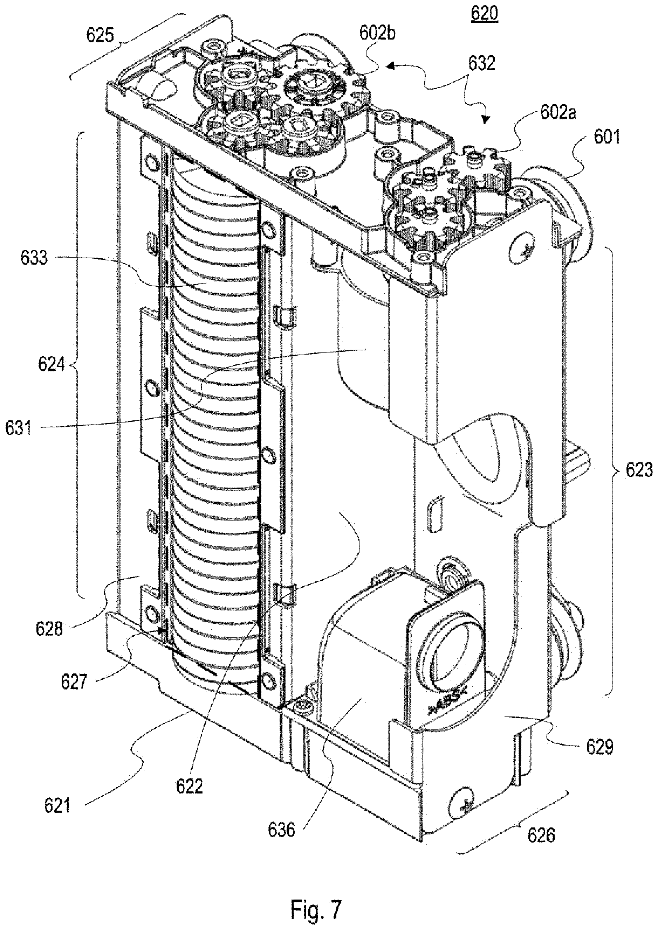

Fig. 7 is a top perspective view of the brush unit 620 as viewed from the cylinder unit 660 side.

The brush unit 620 comprises a brush-side casing 621 and a plurality of inner walls 622. The inner space of the brush-side casing 621 is sectioned by the inner walls 622 into four spaces of a machine space 623, a brush space 624, a gear space 625, and a storage space 626.

The machine space 623 and the brush space 624 extend vertically and are adjoiningly arranged in the width direction. The machine space 623 is positioned closer to the device side wall 421 of the device housing 420 (see Fig. 5) than the brush space 624. The gear space 625 extends horizontally over the machine space 623 and the brush space 624. The storage space 626 extends horizontally under the machine space 623 and the brush space 624.

The depths of the spaces 623-626 are substantially the same. The widths of the gear space 625 and the storage space 626 are substantially the same as the width of the machine space 623 and the brush space 624 as a unit. The height of the brush space 624 is substantially the same as the height of the filter 410 (i.e. the height H, see Fig. 3). The brush space 624 and the storage space 626 are basically closed spaces. Meanwhile, the brush space 624 is open to the storage space 626 at the bottom side of the brush space 624. The brush space 624 is also open to the outside of the brush-side casing 621 through a brush-side opening 627 formed in a brush-side wall 628. The brush-side wall 628 is one of the side walls of the brush-side casing 621, which faces the cylinder unit 660.

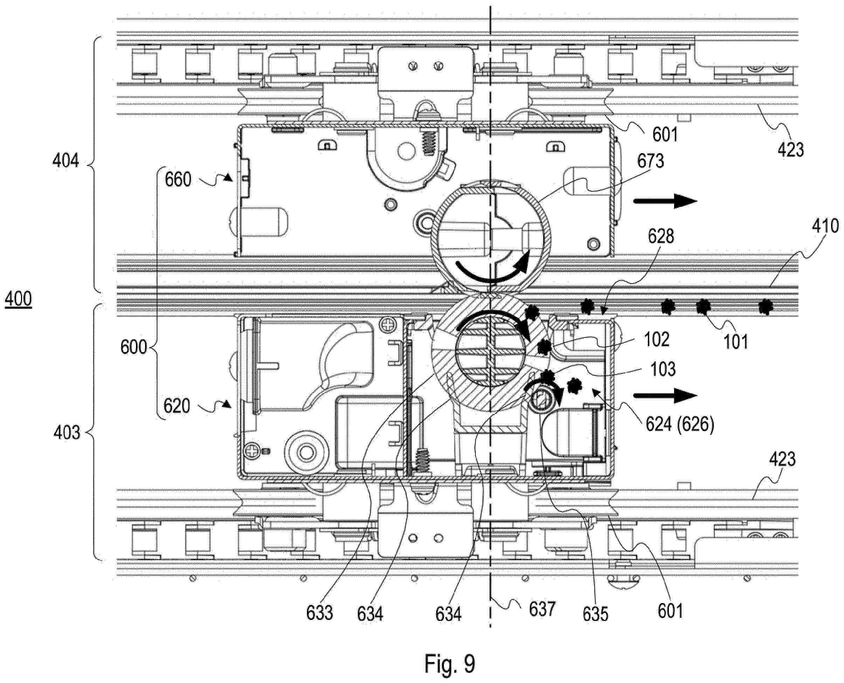

The brush unit 620 comprises a first motor 631, a gear mechanism 632, a brush 633, two combs (comb-like members), a separation roller and an exhaust port 636 (see the combs 634 and the separation roller 635 in Fig. 9).

The first motor 631 is a stepping motor arranged in the machine space 623. The first motor 631 is configured to be controlled by the device-side control box 430 (see Fig. 5) to switch between a forward rotation mode and an inverse rotation mode. The first motor 631 is also configured to be controlled by the device-side control box 430 to output a rotational force at a predetermined rotation speed and torque in a given rotation mode to the gear mechanism 632.

The gear mechanism 632 is arranged mainly in the gear space 625. The gear mechanism 632 comprises a plurality of gears including the pinion gears 602 mentioned above and a plurality of shafts. The gear mechanism 632 includes the first pinion gear 602a and the second pinion gear 602b which mesh with the same rack. The gear mechanism 632 is configured to transfer the rotational force outputted from the first motor 631 to the first pinion gear 602a so as to move the brush unit 620 with respect to the rack. This movement of the brush unit 620 generates a rotational force of the second pinion gear 602b. The gear mechanism 632 is also configured to transfer the rotational force of the second pinion gear 602b to the brush 633 and the separation roller. Thus, the gear mechanism 632 is configured to transfer the rotational force from the first motor 631 to the first pinion gear 602a, the brush 633 and the separation roller with appropriate rotation directions, rotation speeds and torques according to the rotation of the first motor 631.

The brush 633 is a roll brush mainly arranged in the brush space 624. The axis of the brush 633 vertically extends from the gear space 625 to the storage space 626. The brush 633 is rotatably supported about the axis (a rotation axis) at the gear space 625 and the storage space 626. The axis of the brush 633 is connected to the gear mechanism 632 in the gear space 625. The brush 633 comprises bristles uniformly arranged around the axis. The bristles are formed over the height range of the brush space 624. In other words, the brush 633 extends from one end side to the other end side of the filter 410 in the height direction, and the height range of the part where the bristles are formed on the brush 633 substantially corresponds to the height range of the mesh sheet 412 of the filter 410.

The brush 633 is configured and positioned such that the bristles which are located at a predetermined angle range with respect to the axis of the brush 633 protrude from the brush-side opening 627 formed in the brush-side wall 628 when no resisting force is exerted to the bristles. The brush-side opening 627 has a long rectangular shape. Thus, the brush 633 is configured to rotate the bristles while exposing the bristles from the brush-side opening 627 under the control of the body-side control box 530.

The brush-side opening 627 may have a slightly wider width than the area from which the bristles protrude. Thus, the brush unit 620 has clearance gaps between the brush 633 and the brush-side wall 628 at least on each side of the protruding part of the brush 633 in the brush-side opening 627. The clearance gap allows the particles adhered to the protruding part of the bristles to be smoothly introduced into the brush space 624 along with the rotation of the brush 633.

The combs are arranged in the brush space 624. The combs are respectively fixed in parallel to the brush 633 and in contact with the bristles of the brush 633. The combs are configured to comb the bristles of the brush 633 when the brush 633 rotates. The configuration of the combs will be detailed later.

The separation roller is arranged in the brush space 624 in parallel to one of the combs and in contact with teeth of the comb. The axis of the separation roller is rotatably supported at the gear space 625 and the storage space 626. The separation roller is connected to the gear mechanism 632 in the gear space 625. The separation roller is configured to loosen the particles clotting on the combs. The configuration of the separation roller will be detailed later.

The exhaust port 636 is arranged in the machine space 623 at the bottom side of the machine space 623. The exhaust port 636 has a shape of a bend tube. One end of the exhaust port 636 leads to the storage space 626 from the above. Another end of the exhaust port 636 is positioned higher than the storage space 626 and leads to the outside of the brush-side casing 621 at a controller-side wall 629. The controller-side wall 629 is one of the side walls of the brush-side casing 621 which faces the device side wall 421 (see Fig. 5) of the device housing 420. Thus, the exhaust port 636 is configured to allow the storage space 626 to communicate with the outside of the brush-side casing 621 at the controller-side wall 629.

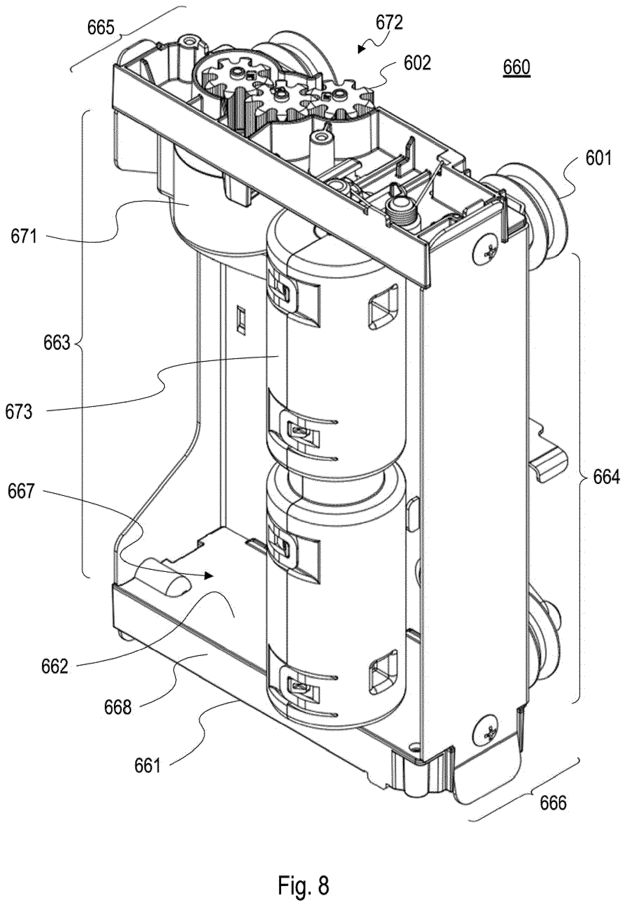

Fig. 8 is a top perspective view of the cylinder unit 660 as viewed from the brush unit 620 side.

The cylinder unit 660 comprises a cylinder-side casing 661. The inner space of the cylinder-side casing 661 includes four spaces of a cylinder-side machine space 663, a cylinder space 664, a cylinder-side gear space 665 and a lower space 666.

In a plane parallel to the filter 410, the positions of the cylinder-side machine space 663, the cylinder space 664, the cylinder-side gear space 665 and the lower space 666 correspond to the positions of the machine space 623, the brush space 624, the gear space 625 and the storage space 626 of the brush unit 620, respectively in this order. The cylinder-side machine space 663 and the cylinder space 664 are open to the outside of the cylinder-side casing 661 through a cylinder-side opening 667 formed on a brush-facing side 668. The brush-facing side 668 is one of the sides of the cylinder-side casing 661, which faces the brush unit 620. The cylinder unit 660 may also comprises one or more of inner walls 662 which section the inner space of the cylinder-side casing 661.

The cylinder unit 660 comprises a second motor 671, a cylinder-side gear mechanism 672 and a cylinder 673.

The second motor 671 is a stepping motor arranged in the cylinder-side machine space 663. The second motor 671 is configured to be controlled by the device-side control box 430 (see Fig. 5) to switch between a forward rotation mode and an inverse rotation mode. The second motor 671 is also configured to output a rotational force at a predetermined rotation speed and torque in a given rotation mode to the cylinder-side gear mechanism 672.

The cylinder-side gear mechanism 672 is arranged mainly in the cylinder-side gear space 665. The cylinder-side gear mechanism 672 comprises a plurality of gears including the pinion gear 602 mentioned above and a plurality of shafts. The cylinder-side gear mechanism 672 is configured to transfer the rotational force outputted from the second motor 671 to the pinion gear 602 with appropriate rotation directions, rotation speeds and torques according to the rotation of the second motor 671, so as to move the cylinder unit 660 with respect to the rack.

The cylinder 673 is a cylindrical member arranged in the cylinder space 664. The axis of the cylinder 673 vertically extends from the cylinder-side gear space 665 to the lower space 666. The axis of the cylinder 673 is freely rotatably supported at the cylinder-side gear space 665 and at the lower space 666. The cylinder 673 comprises a tubular element with constrictions arranged at positions corresponding to the positions of the horizontal ribs of the filter frame 411 (see Fig. 3). The height range of the tubular element is substantially the same as the height range of the part where the bristles is formed on the brush 633.

The cylinder unit 660 is configured such that the brush-side casing 621 and the cylinder-side casing 661 are at substantially the same position in the width direction when the relative position between the brush unit 620 and the cylinder unit 660 is at a predetermined relative position (hereinafter referred to as "the ideal relative position"). The ideal relative position is, for instance, a relative position in which the positional gap in the width direction between the axis of the brush 633 and the axis of the cylinder 673 is within a predetermined range.

The cylinder 673 is configured and positioned such that the part of the tubular element which is located at a predetermined angle range with respect to the axis of the cylinder 673 protrude from the cylinder-side opening 667 when no resisting force is exerted to the tubular element.

Thus, the cylinder 673 is configured to freely rotate the tubular element while exposing the tubular element from the cylinder-side opening 667. The cylinder unit 660 is preferably configured to exert pressure on the cylinder 673 in a direction towards the brush 633 of the brush unit 620 when the brush unit 620 and the cylinder unit 660 are in the ideal relative position. By this pressure exerted on the cylinder 673, the contact between the brush 633 and the cylinder 673 through the filter 410 is ensured.

Fig. 9 is a partial horizontal cross-sectional view of the filter cleaning device 400 when the filter cleaning device 400 is in use. More specifically, Fig. 9 shows a state of the vicinity part of the cleaning unit 600 when cross-sectioned at a central part of the cleaning unit 600 and viewed from the above.

The inner space of the device housing 420 of the filter cleaning device 400 is divided by the filter 410 into an upstream side space 403 and a downstream side space 404. The brush unit 620 is arranged in the upstream side space 403, and the cylinder unit 660 is arranged in the downstream side space 404. The filter cleaning device 400 is configured to move the cleaning unit 600 in the width direction, while keeping the cleaning unit 600 in a second predetermined relative position with respect to the filter 410 in the height direction and in a predetermined clearance with respect to the filter 410 in the depth direction.

The second predetermined relative position is a relative position by which the height ranges of the brush 633 and the cylinder 673 substantially coincide with the height range of the filter 410. The predetermined clearance is a clearance by which the protruding part of the brush 633 engages with the mesh sheet 412 (see Fig. 3) of the filter 410 at a predetermined depth. The predetermined clearance is also a clearance by which the protruding part of the cylinder 673 contacts with mesh sheet 412 with a predetermined pressure when the brush 633 engages with the mesh sheet 412. The predetermined pressure is a pressure which balances with the pressure exerted to the filter 410 from the opposite side by the engaging brush 633.

The combs 634 are configured and positioned so as to be substantially symmetrical with respect to a plane 637 which is parallel to the depth direction and passes through the axis of the brush 633. The combs 634 are also positioned opposite to the brush-side wall 628 with respect to the axis of the brush 633.

Each of the combs 634 comprises a comb body extending in the height direction and a plurality of teeth aligned on the comb body. The teeth are uniformly arranged over the height range of the part where the bristles are formed on the brush 633. The teeth protrude towards the bristles of the brush 633. The teeth are configured to engage with the bristles at a predetermined depth and a predetermined angle with respect to the axis of the brush 633.

The teeth of a pair of the combs 634 form a V-shape opening towards the brush 633 while respectively engaging with the brush 633. Each of the combs 634 is configured such that the teeth are inclined towards the brush-side wall 628 with respect to a position of the axis of the brush 633. Thus, teeth of each combs 634 are oriented towards upstream side relative to a direction towards the rotation axis of the brush 633 in the corresponding rotation direction. More specifically, the comb 634 positioned on the right is configured to comb the brush 633 when the brush 633 rotates clockwise. The comb 634 positioned on the left is configured to comb the brush 633 when the brush 633 rotates counterclockwise.

Here, a line at which the outer perimeter of the brush 633 and the teeth of the comb 634 intersect with each other is referred to as "the outer-engaged line." The separation roller 635 has a diameter much smaller than the diameter of the brush 633. The separation roller 635 is positioned near the outer-engaged line so as to be in contact with both the teeth of the comb 634 which combs the brush 633 when the brush 633 rotates clockwise (i.e. the comb 634 positioned on the right) and the bristles of the brush 633 over the height range of the bristles.

The separation roller 635 has spiral threads in a form of a left-hand screw around the axis of the separation roller 635 over the height range of the part where the bristles are formed on the brush 633 The separation roller 635 is configured to be rotated in the same rotation direction as the brush 633 by the gear mechanism 632 (see Fig. 7).

Thus, the separation roller 635 is configured to move, at the outer-engaged line, the spiral threads towards a direction which is downward and opposite to the movement direction of the bristles when the corresponding comb 634 is combing the brush 633. This function is achieved when the brush 633 rotates against the teeth of the corresponding comb 634, i.e. when the brush 633 is combed by the corresponding comb 634.

Another separation roller 635 corresponding to the comb 634 which combs the brush 633 when the brush 633 rotates counterclockwise (i.e. the comb 634 positioned on the left) may be provided to the brush unit 620. In this case, the other separation roller 635 is positioned near the outer-engaged line of the comb 634 which combs the brush 633 when the brush 633 rotates counterclockwise. The other separation roller 635 has spiral threads in a form of a right-hand screw around the axis of the brush 633. The other separation roller 635 is configured to be rotated in the same rotation direction as the brush 633.

The gear mechanism 632 of the brush unit 620 is configured to rotate the brush 633 in a predetermined rotation direction. The predetermined rotation direction is a rotation direction by which the protruding part of the bristles moves against the relative movement of the filter 410 with respect to the brush unit 620. In other words, the gear mechanism 632 is configured to rotate the brush 633 clockwise when moving the brush unit 620 rightward, and rotate the brush 633 counterclockwise when moving the brush unit 620 leftward.

The cylinder unit 660 is controlled to move in width direction synchronously with the brush unit 620 while pressing the protruding part of the cylinder 673 towards the protruding part of the rotating brush 633 through the filter 410. The diameter of the each bristle of the brush 633 is smaller than the diameter of the each mesh of the mesh sheet 412. Therefore, the ends of the bristles protrude from the mesh sheet 412 towards the cylinder unit 660. The cylinder unit 660 is passively rotated by the friction with the protruding ends of the bristles or the surface of the filter 410.

By this movement of the cleaning unit 600, the particles 101 adhering to the filter 410 is scraped by the bristles. The scraped particles 102 then adhere to the bristles and caught by the comb 634 with the teeth opposed to the transfer direction of the scraped particles 102. While some of the caught particles 103 would immediately fall into the storage space 626 by gravity, the rest would clot on the teeth at the above-mentioned outer-engaged line. The clotting particles are loosened with time by the movement of the threads of the corresponding separation roller 635 to fall into the storage space 626 by gravity.

Even though the brush unit 620 exerts a pressure to the filter 410, the total pressure exerted to the filter 410 by the cleaning unit 600 is stabilized to nearly zero by the function of the cylinder unit 660. Therefore, it is prevented to damage the filter 410 even if the pressure exerted by the brush unit 620 is great and/or the filter 410 is undulating. This ensures a high cleaning efficiency of the filter cleaning device 400.

Moreover, since the cylinder unit 660 applies the tubular elements to the brushes of the brush unit 620 from the opposite side of the surface of the filter 410, it is prevented to scatter the particles from the part where the bristles engage with the filter 410.

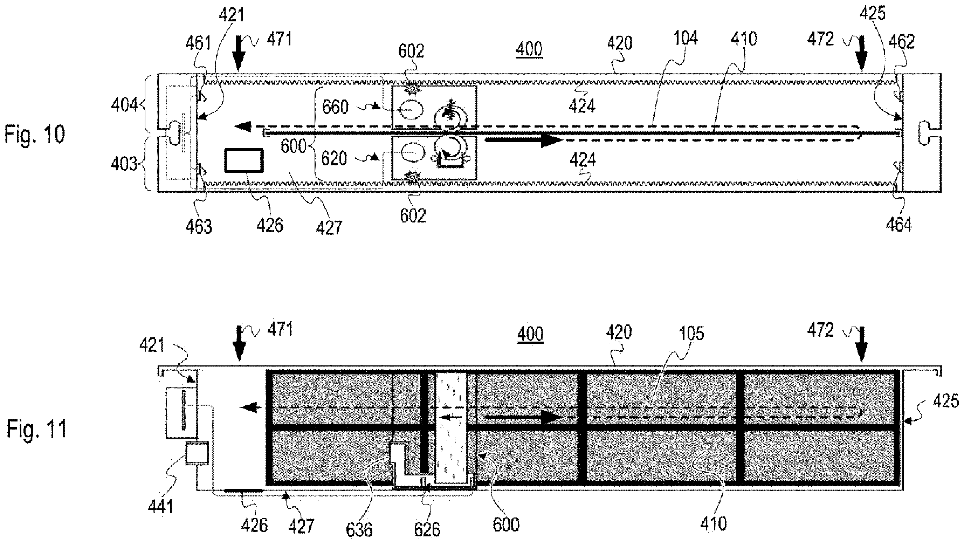

Fig. 10 is a schematic top view of the filter cleaning device 400, indicating the movement of the cleaning unit. Fig. 11 is a schematic side view of the filter cleaning device 400, indicating the movement of the cleaning unit.

As mentioned above, the pinion gears 602 of the cleaning unit 600 mesh with the racks 424 extending in the width direction. The cleaning unit 600 is controlled to travel in the width direction between a starting point (one end side of the filter) 471 and a turnaround point (the other end side of the filter) 472 in the width direction using the racks 424. The starting point 471 is a position close to the device side wall 421 in the inner space of the device housing 420. The starting point 471 is located within the parking area 452. The turnaround point 472 is a position close to an opposite side wall 425 in the inner space of the device housing 420. The opposite side wall 425 is one of the side walls of the device housing 420, which is opposite to the device side wall 421. The filter cleaning device 400 comprises four limit switches (LS) 461-464.

The first limit switch 461 is disposed on the inner surface of the device side wall 421 of the device housing 420 in the downstream side space 404. The first limit switch 461 is configured to detect whether the cylinder unit 660 is at the starting point 471.

The second limit switch 462 is disposed on the inner surface of the opposite side wall 425 in the downstream side space 404. The second limit switch 462 is configured to detect whether the cylinder unit 660 is at the turnaround point 472.

The third limit switch 463 is disposed on the inner surface of the device side wall 421 of the device housing 420 in the upstream side space 403. The third limit switch 463 is configured to detect whether the brush unit 620 is at the starting point 471.

The fourth limit switch 464 is disposed on the inner surface of the opposite side wall 425 in the upstream side space 403. The fourth limit switch 464 is configured to detect whether the brush unit 620 is at the turnaround point 472.

The positions of the first limit switch 461 and the third limit switch 463 are arranged so as to coordinate with the position of the cleaning unit 600 when the cleaning unit 600 is at the starting point 471 with the brush unit 620 and the cylinder unit 660 being in the ideal relative position.

The positions of the second limit switch 462 and the fourth limit switch 464 are also arranged so as to coordinate with the position of the cleaning unit 600 when the cleaning unit 600 is at the turnaround point 472 with the brush unit 620 and the cylinder unit 660 being in the ideal relative position.

In this embodiment, the starting point 471 of the cleaning unit 600 is the same as the parking position mentioned above.

As indicated by broken line arrows 104, 105 in Figs. 10 and 11, for each time of the cleaning operation, the cleaning unit 600 reciprocates along the filter 410. More specifically, the cleaning unit 600 is controlled to move forward after starting from the starting point 471, turn around at the turnaround point 472, and then and move backward to the starting point 471. During the cleaning operation, the particles are removed from the filter 410 and accumulated in the storage space 626 of the cleaning unit 600 as explained along with Fig. 9.

Incidentally, the device housing 420 has an aperture (a first hole) 426 formed within a housing bottom surface 427. The housing bottom surface 427 is a bottom surface of the device housing 420. The aperture 426 is located at a position (a first position) which is adjacent to the starting point 471 of the cleaning unit 600 and in the vicinity of the device side wall 421. The configuration of the aperture 426 will be detailed later.

The cleaning unit 600 is configured to engage the exhaust port 636 with the exhaust opening 441 arranged on the device side wall 421 so as to allow the storage space 626 to communicate with the exhaust opening 441 when the cleaning unit 600 is at the parking position.

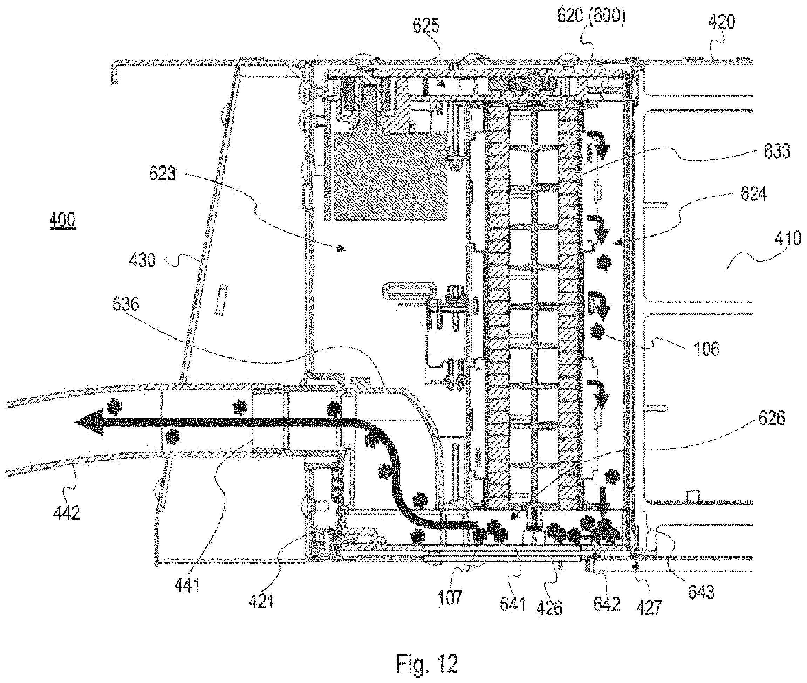

Fig. 12 is a partial vertical cross-sectional view of the filter cleaning device 400, indicating the transfer of the particles. More specifically, Fig. 12 shows a state of the vicinity part of the cleaning unit 600 along with the state of the movement of the particles when cross-sectioned at a central part of the brush unit 620 and viewed from the upstream side of the main air-flow.

The particles 106 removed from the filter 410 fall from the brush space 624 into the storage space 626 to be accumulated in the storage space 626. The cleaning unit 600 is controlled to keep parking at the parking position while the filter cleaning device 400 is not performing the cleaning operation, i.e. when the filter cleaning device 400 is in non-use state. Thus, the exhaust port 636 is connected to the exhaust opening 441 of the device housing 420, allowing the storage space 626 to communicate with the suction socket 443 (see Fig. 2) via the exhaust opening 441 and the hose 442.

In this state, when an air suction is performed at the suction socket 443, the accumulated particles 107 in the storage space 626 are sucked out to the suction socket 443 via the exhaust port 636, the exhaust opening 441 and hose 442 to be discharged from the storage space 626.

As explained above, it is desirable to allow the operator to perceive an appropriate timing for particle evacuation. For this, as explained in detail hereinafter, the filter cleaning device 400 is configured to allow the operator to easily observe an actual state of the particle-accumulation in the storage space 626, including the amount of the accumulated particles 107.

### Configuration for Accumulated Particles Observation

Hereinafter, the structural part which forms the storage space 626 is referred to as "the storage member 643." The storage member 643 is accordingly disposed under the brush 633, is configured to receive particles having fallen from the brush 633, and forms a bottom surface of the brush unit 620.

As shown in Fig. 12, the storage member 643 of the brush unit 620 has a storage bottom surface 642. The storage bottom surface 642 is a bottom surface of the storage member 643, which extends horizontally. The filter cleaning device 400 is configured to slide the cleaning unit 600 in the width direction while keeping the storage bottom surface 642 close to the housing bottom surface 427. Therefore, the storage bottom surface 642 is positioned close to the housing bottom surface 427 also when the cleaning unit 600 is at the parking position.

Hence, the housing bottom surface 427 and the storage bottom surface 642 are formed such that the aperture 426 is to be closed with or at least covered with the storage bottom surface 642.

In addition, the brush unit 620 is configured to allow the storage space 626 to be seen from outside through the storage bottom surface 642. More specifically, the brush unit 620 has a transparent part 641 formed in the storage bottom surface 642 directly above the aperture 426.

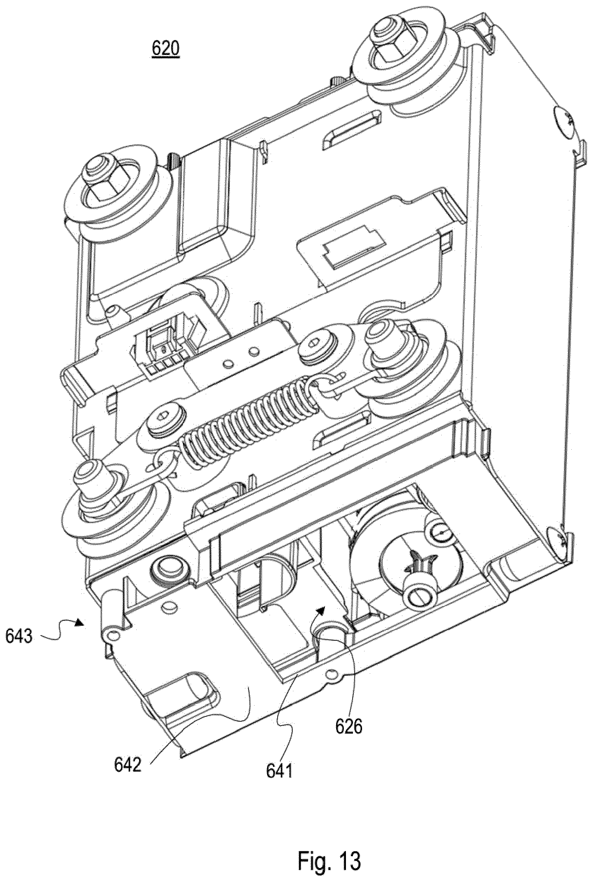

Fig. 13 is a bottom perspective view of the brush unit 620.

The brush unit 620 comprises the transparent part 641 formed in the storage bottom surface 642 (i.e. the bottom surface of the storage member 643). The transparent part 641 is arranged in a centre part of the storage bottom surface 642. The transparent part 641 is made transparent in Fig. 13 and the following figures. For instance, the transparent part 641 is made of polyethylene terephthalate (PET) and fixed to the storage bottom surface 642 by being fitted to an aperture formed on the storage bottom surface 642. Thus, the brush unit 620 is configured to allow the storage space 626 to be seen from the outside of the underside of the brush unit 620.

Alternatively, the whole of the storage bottom surface 642 or the whole of the storage member 643 may be transparent. In any case, the transparent part 641 is defined as a part or whole of the storage bottom surface 642.

The filter cleaning device 400 is configured to allow the transparent part 641 to be seen from outside through the aperture 426.

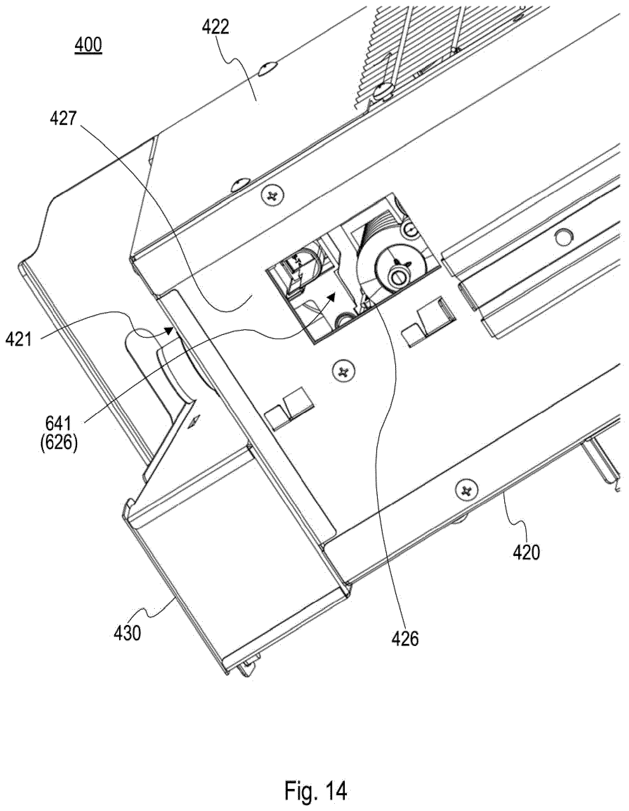

Fig. 14 is a partial bottom perspective view of the inner air-conditioning unit 100. More specifically, Fig. 14 shows an external view of the vicinity part of the aperture 426 when the cleaning unit 600 is at the parking position and viewed obliquely from the below.

The aperture 426 is formed in the housing bottom surface 427 at a position where the transparent part 641 of the storage member 643 is positioned when the cleaning unit 600 is at the parking position. With such a position, the transparent part 641 is exposed to outside of the housing bottom surface 427 through the aperture 426. Accordingly, the state of the storage space 626 of the brush unit 620 is exposed thorough the transparent part 641 and the aperture 426.

For instance, in the case where the housing bottom surface 427 is made of a metal plate, the aperture 426 may be formed by punching. Thus, it is possible to provide the aperture 426 at low cost and with a simple structure.

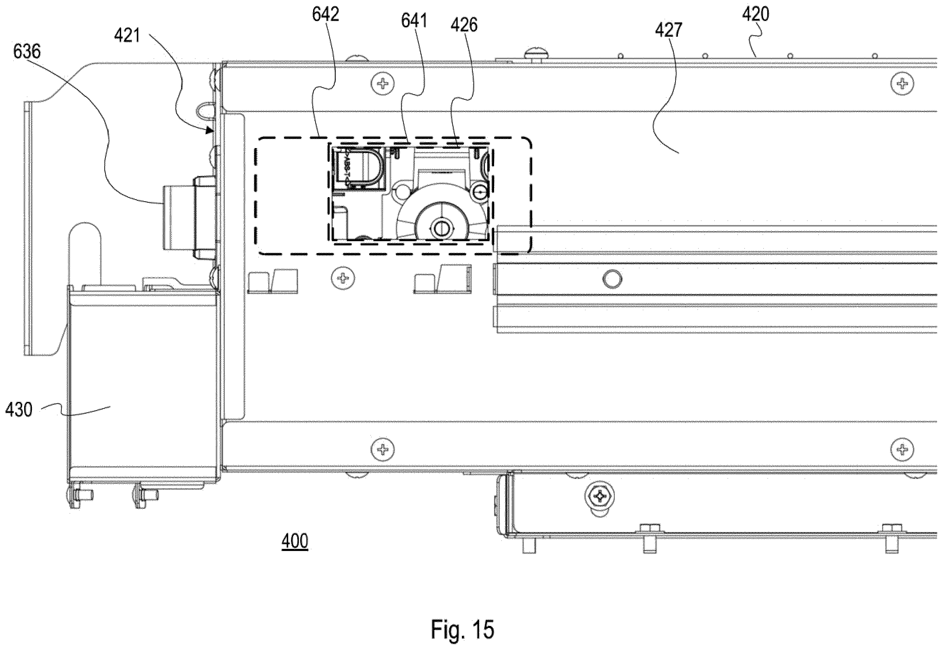

Fig. 15 is a partial bottom plan view of the filter cleaning device 400. More specifically, Fig. 15 shows an external view of the vicinity part of the aperture 426 when the cleaning unit 600 is at the parking position and viewed from directly below.

In a horizontal plane, the area of the aperture 426 is arranged within the area of the storage bottom surface 642 and preferably smaller than the area of the storage bottom surface 642. The storage bottom surface 642 is configured to be in contact with or nearly in contact with the housing bottom surface 427 at an area surrounding the aperture 426 at least when the cleaning unit 600 is at the parking position. Thus, the aperture 426 is configured to be entirely closed or covered by the storage bottom surface 642 when the cleaning unit 600 is at the parking position.

The area of the transparent part 641 is, in a horizontal plane, substantially the same as the area of the aperture 426 or larger than the area of the aperture 426. Thus, transparent part 641 is configured to allow the storage space 626 to be seen making the most of the size of the aperture 426.

Accordingly, the device housing 420 and the storage member 643 are formed such that the inside of the storage member 643, in which particulates removed from the filter 410 are accumulated, is visible from below the filter cleaning device 400 when the cleaning unit 600 is at the parking position. In addition, the device housing 420 and the storage member 643 are formed such that the aperture 426 of the device housing 420 is to be closed or covered with the storage bottom surface 642 of the storage member 643.

As mentioned above, the inspection door 223 is arranged under the filter cleaning device 400 (see Fig. 1). Therefore, the operator can easily observe directly by his eyes whether the storage member 643 is already full with particles just by opening the inspection door 223.

As detailed hereinafter, the filter cleaning device 400 is also configured such that the storage member 643 is located directly over the aperture 426 in non-use state of the filter cleaning device 400.

### Functional Configuration of Filter Cleaning Device

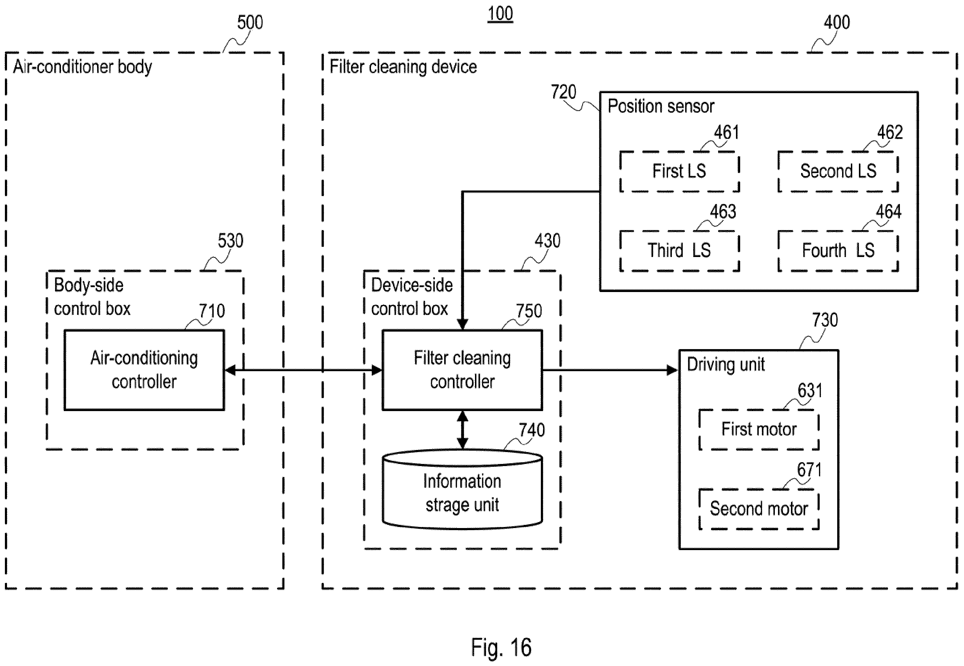

Fig. 16 is a block diagram indicating a functional configuration of the inner air-conditioning unit 100.

The inner air-conditioning unit 100 has an air-conditioning controller 710, a position sensor 720, a driving unit 730, an information storage unit 740 and a filter cleaning controller 750.

The air-conditioning controller 710 is disposed in the body-side control box 530 of the air-conditioner body 500. The function of the air-conditioning controller 710 is achieved by information processing and signal processing performed by the arithmetic circuit in the body-side control box 530.

The air-conditioning controller 710 is configured to execute the air-conditioning operation and transmit air-conditioner information to the filter cleaning controller 750. The air-conditioner information indicates whether the air-conditioning operation is currently performed. The air-conditioning controller 710 transmits the air-conditioner information by transmitting a signal to the filter cleaning controller 750.

The air-conditioning controller 710, for instance, transmits the air-conditioner information at predetermined intervals. The air-conditioning controller 710 may transmit the air-conditioner information at each time when the air-conditioning operation is started or ended. The air-conditioning controller 710 may transmit the air-conditioner information upon receiving a request for the air-conditioner information from the filter cleaning controller 750.

In addition, the air-conditioning controller 710 is configured to refrain from performing the air-conditioning operation when a request for refraining from performing the air-conditioning operation is made by the filter cleaning controller 750.

The position sensor 720 is disposed in the filter cleaning device 400. The position sensor 720 includes the first limit switch 461, the second limit switch 462, the third limit switch 463 and the fourth limit switch 464 (see Fig. 10).

The position sensor 720 is configured to detect the position of the cleaning unit 600 in the width direction. The position sensor 720 detects at least whether the cleaning unit 600 is at the starting point 471 and whether the cleaning unit 600 is at the turnaround point 472 (see Figs. 10 and 11). The position sensor 720 is configured to transmit position information to the filter cleaning controller 750. The position information indicates the result of the detection made by the position sensor 720. The position sensor 720 transmits the position information by transmitting a signal to the filter cleaning controller 750. The position sensor 720, for instance, transmits the position information at predetermined intervals. The position sensor 720 may transmit the position information at each time when it is detected that the cleaning unit 600 is at the starting point 471 or the turnaround point 472. The position sensor 720 may transmit the position information upon receiving a request for the position information from the filter cleaning controller 750.

The driving unit 730 is disposed in the filter cleaning device 400. The driving unit 730 includes the first motor 631 and the second motor 671. As explained above, the first motor 631 and the second motor 671 are configured to generate forces for driving the brush unit 620 and the cylinder unit 660, respectively (see Figs. 7 and 8). The driving unit 730 may further include mechanical members, such as the gear mechanism 632, the cylinder-side gear mechanism 672 and so forth, which are used for driving the brush unit 620 and the cylinder unit 660.

The driving unit 730 is configured to move the cleaning unit 600 along the width direction between the starting point 471 and the turnaround point 472 while rotating the brush 633 about the rotation axis, under the control by the filter cleaning controller 750. The driving unit 730 rotates the brush 633 such that the bristles which are in contact with the filter 410 moves against the relative movement of the filter 410 with respect to the cleaning unit 600.

The information storage unit 740 is disposed in the device-side control box 430 of the filter cleaning device 400. The information storage unit 740 includes a memory area of the recording medium in the device-side control box 430. The information storage unit 740 is configured to store the control programs and the information necessary for the operation of the filter cleaning device 400.

The filter cleaning controller 750 is disposed in the device-side control box 430 of the filter cleaning device 400. The function of the filter cleaning controller 750 is achieved by information processing and signal processing performed by the arithmetic circuit in the device-side control box 430.

The filter cleaning controller 750 is configured to execute the operation of the filter cleaning device 400 according to the control programs and the information stored in the information storage unit 740. The filter cleaning controller 750 is especially configured to execute the cleaning operation by using the position sensor 720 and by controlling the driving unit 730. The filter cleaning controller 750 controls the driving unit 730 such that the storage member 643 is located directly over the aperture 426 when the filter cleaning device 400 is in non-use state, as detailed below.

### Operation of Filter Cleaning Device

The operation of the filter cleaning device 400 is executed by the filter cleaning controller 750 performing a process.

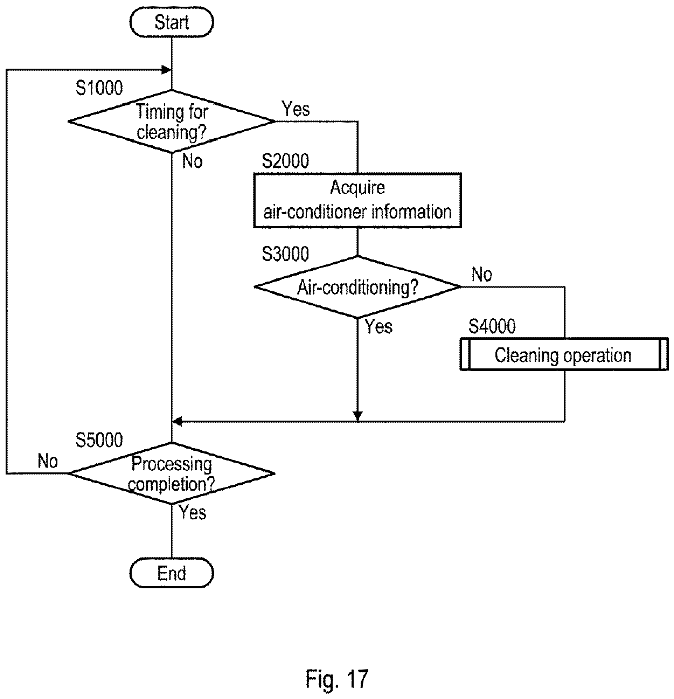

Fig. 17 is a flow chart indicating the process performed by the filter cleaning controller 750.

At step S1000, the filter cleaning controller 750 determines whether a timing for cleaning the filter 410 has arrived.

The timing for cleaning the filter 410 may a timing which comes at predetermined intervals, a timing when the air-conditioning operation is ended, or upon receiving a request for cleaning the filter 410. If a particle sensor is mounted on the filter cleaning device 400, the request for cleaning the filter 410 may be transmitted from the particle sensor. The particle sensor is, for instance, configured to detect whether the amount of the particles adhering to the filter 410 exceeds a predetermined level. The request for cleaning the filter 410 may be transmitted from a user interface or an information processing unit (both not shown) which is disposed in the distance.

When the timing for cleaning the filter 410 has not arrived (S1000: No), the filter cleaning controller 750 advances the process to step S5000 explained later. When the timing for cleaning the filter 410 has arrived (S1000: Yes), the filter cleaning controller 750 advances the process to step S2000.

At step S2000, the filter cleaning controller 750 acquires the air-conditioner information. The filter cleaning controller 750 may acquire the air-conditioner information by referring the air-conditioner information stored in the information storage unit 740, which is prestored by the filter cleaning controller 750 upon receiving the air-conditioner information. The filter cleaning controller 750 may acquire the air-conditioner information by transmitting a request for the air-conditioner information to the air-conditioning controller 710 and by receiving a response.

At step S3000, the filter cleaning controller 750 determines, based on the acquired air-conditioner information, whether the air-conditioning operation is currently performed. In other words, the filter cleaning controller 750 determines whether the air-conditioner body 500 is air-conditioning. When the air-conditioner body 500 is air-conditioning (S3000: Yes), the filter cleaning controller 750 advances the process to step S5000. When the air-conditioner body 500 is not air-conditioning (S3000: No), the filter cleaning controller 750 advances the process to step S4000.

At step S4000, the filter cleaning controller 750 executes the cleaning operation, and then advances the process to step S5000.

At step S5000, the filter cleaning controller 750 determines whether it is indicated to complete the process by the operator or the like. When it is not indicated to complete the process (S5000: No), the filter cleaning controller 750 returns the process to the step S1000. When it is not indicated to complete the process (S5000: Yes), the filter cleaning controller 750 completes the process.

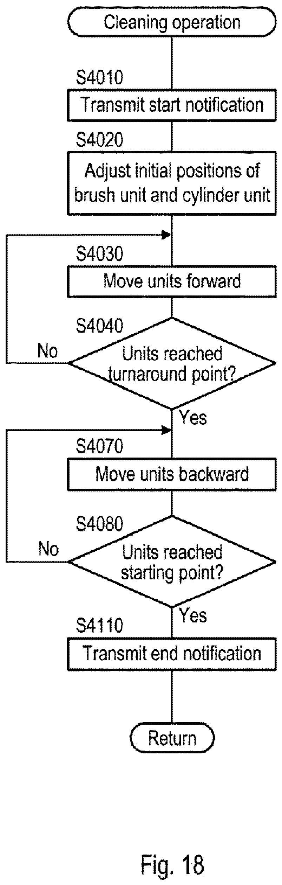

Fig. 18 is a flow chart indicating the process of the cleaning operation (Fig. 17, step S4000), performed by the filter cleaning controller 750.

At step S4010, the filter cleaning controller 750 transmits a start notification to the air-conditioning controller 710, as the request for refraining from performing the air-conditioning operation.

At step S4020, the filter cleaning controller 750 adjust initial positions of the brush unit 620 and cylinder unit 660 for the cleaning operation to the starting point 471 (see Figs. 10 and 11).

At step S4030, the filter cleaning controller 750 controls the driving unit 730 such that the brush unit 620 and the cylinder unit 660 move forward, i.e. in a direction away from the device side wall 421 in the width direction (rightward), in substantially the same predetermined speed.

At step S4040, the filter cleaning controller 750 determines whether both the brush unit 620 and cylinder unit 660 have reached the turnaround point 472 (see Figs. 10 and 11) according to the position information transmitted from the position sensor 720. When any one of the brush unit 620 and cylinder unit 660 has not reached the turnaround point 472 (S4040: No), the filter cleaning controller 750 returns the process to the step S4030. When both the brush unit 620 and cylinder unit 660 has reached the turnaround point 472 (S4040: Yes), the filter cleaning controller 750 advances the process to step S4070.

At step S4070, the filter cleaning controller 750 controls the driving unit 730 such that the brush unit 620 and the cylinder unit 660 move backward, i.e. in a direction closer to the device side wall 421 in the width direction (leftward), in substantially the same predetermined speed.

At step S4080, the filter cleaning controller 750 determines whether both the brush unit 620 and cylinder unit 660 have reached the starting point 471 (see Figs. 10 and 11) according to the position information transmitted from the position sensor 720. When any one of the brush unit 620 and cylinder unit 660 has not reached the starting point 471 (S4080: No), the filter cleaning controller 750 returns the process to the step S4070. When both the brush unit 620 and the cylinder unit 660 has reached the starting point 471 (S4080: Yes), the filter cleaning controller 750 advances the process to step S4110.

At step S4110, the filter cleaning controller 750 transmits an end notification to the air-conditioning controller 710, as a cancellation of the request for refraining from performing the air-conditioning operation. Then the filter cleaning controller 750 returns the process to the step S5000 in Fig. 17. The parking position of the cleaning unit 600 is accordingly set to the starting point 471.

Thus, the filter cleaning controller 750 is configured to execute the cleaning operation only when the air-conditioning operation is not performed, and finish the cleaning operation with the cleaning unit 600 disposed at the parking position. The cleaning unit 600 accordingly parks (remains) at the parking position at least while the air-conditioning operation is performed.

### Advantageous Effect

As explained above, the filter cleaning device 400 is configured such that the inside of the storage member 643 is visible from below the filter cleaning device 400 when the cleaning unit 600 is at the parking position. Therefore, the operator can easily observe the state of the particle-accumulation in the filter cleaning device 400 when the cleaning operation of the filter cleaning device 400 is not performed. If the operator finds that the storage member 643 is full with particles, he would perform the discharging operation.

Moreover, the filter cleaning device 400 is configured such that the aperture 426 of the device housing 420, which allows such an easy observation, is to be closed or covered when the cleaning unit 600 is at the parking position. Therefore, the air flow through the aperture 426 is prevented or supressed when the cleaning unit 600 is at the parking position.

When the air-conditioning operation is performed, the cleaning unit 600 is at the parking position to close or cover the aperture 426. Therefore, the aperture 426 does not affect the main air-flow by the air-conditioning operation. If the aperture 426 were not closed while the air-conditioning operation is performed, a considerable amount of the air in the in-ceiling space would be sucked into the filter cleaning device 400 through the aperture 426 to be mixed with the air taken in through the inlet grating 221. The above configuration of the filter cleaning device 400 makes it possible to prevent such a problematic situation.

Furthermore, the filter cleaning device 400 provides such an effect just by utilizing the brush unit 620 without additional configurations only for closing the aperture 426. It is also possible to provide a transparent plate or the like fixed to the aperture 426. However, it might impair the visibility of the state of the particle-accumulation and lead to an increase in the production cost.

Accordingly, the filter cleaning device 400 allows the operator to easily perceive an appropriate timing for particle evacuation even in a case that the air-conditioner is ceiling-mounted duct type, while preventing an increase in the production cost. This facilitates the discharging operation performed at appropriate timings. Consequently, the filter cleaning device 400 can ensure clean and high-efficient air conditioning performance of the air-conditioner.

Moreover, the filter cleaning device 400 provides the above effects to the air-conditioner which is ceiling-mounted duct type, since it is prevented to cause an increase in the height of the air-conditioner.

### Variations

The configuration of the inner air-conditioning unit according to the present embodiment explained above may be modified. Some examples of such modifications are mentioned below. The each of modification examples may be combined with one or more of the other modification examples.

The storage bottom surface may have a non-horizontal flat shape or a non-flat shape, if the storage bottom surface is configured to close or cover the aperture formed in the housing bottom surface. For instance, both the storage bottom surface and the part of the housing bottom surface in which the aperture is formed may be slightly inclined upward towards the exhaust opening in the same angle. With such a configuration, it is possible to ensure the contact between the storage bottom surface and the aperture while ensuring the visibility of the of the particle-accumulation state.

The housing bottom surface may be a non-horizontal flat shape or a non-flat shape, if the part of the housing bottom surface in which the aperture is formed is disposed so as to face the false ceiling.

The air-conditioner may be obliquely positioned with respect to a horizontal plane. For instance, when the false ceiling is an oblique ceiling, the air-conditioner may be obliquely positioned such that the housing bottom surface is substantially parallel with the false ceiling.

The filter cleaning device may be incorporated in the air-conditioner body. In this case, at least a part of the air-conditioner housing serves as the device housing. Alternatively, the filter cleaning device may be distanced from the air-conditioner body and connected to the air-conditioner body via a duct.

The filter cleaning device may be configured to move the brush unit or the cleaning unit downward at the parking position such that the storage bottom surface tightly closes the aperture. In this case, the filter cleaning device may have a mechanism, including a motor and gears, for moving the brush unit or the cleaning unit in the vertical direction. The mechanism may move the brush unit or the cleaning together with the end parts of the guide rails and/or the end parts of racks.

The aperture may be covered with a transparent part to prevent unnecessary the air flow through the aperture more securely, if a required level of visibility is ensured even with the transparent part.

The shapes of the storage bottom surface, the transparent part of the storage bottom surface, and the aperture may any shape, such as a rectangular shape, a round shape, an oval shape, etc.

The filter cleaning controller may control the cleaning unit to reciprocate a plurality of times for one cleaning operation.

The filter cleaning controller may control the cleaning unit to move to the parking position upon receiving an indication transmitted from a user interface, an information processing unit or the like. In this case, the parking position does not necessarily need to be the same as the starting point of the cleaning unit.

The filter cleaning device may have a sensor which is configured to detect the accumulated particles state in the storage member 643, such as a photo-sensor, and output information indicating the detection result to a user interface, an information processing unit or the like. This configuration allows the operator to perform the observation by his eyes at appropriate timings.

The cleaning unit may be configured to cover the brush-side opening with a lid while the cleaning unit is at the parking position. With this configuration, it is prevented that the accumulated particles in the storage space would leak from the brush-side opening.

The brush unit may have only one comb or more than two combs. The comb may be configured such that the teeth are protruding towards the axis of the brush. The brush unit may have more than two separation rollers. Alternatively, the brush and/or the separation roller does not necessarily need to be provided in the brush unit. For instance, the brush unit may have a rod instead of the comb 634. The rod may be fixed in the brush space in parallel to and in contact with the bristles of the brush. With such a configuration, the bristles of the brush are caught by the rod as the brush rotates, and the particles on the bristles are scraped off by the rod.

The brush may be configured not to rotate. In this case, the brush does not necessarily need to be a roll brush. If the bristles are fixed at a position in which the ends of the bristles are in contact with the filter and have high resilience, the particles scraped by the bristles are introduced into the brush space by the back action of the bristles against the filter.

The cylinder unit may have a counter member with a different shape, such as a plate configured to be in contact with the surface of the filter, instead of the cylinder. Alternatively, a counter member does not necessarily need to be provided in the filter cleaning device, if the pressure exerted on the filter by the brush unit is small.

The filter may have a shape curved in the width direction and/or the height direction. In the case where the filter curves in the width direction, the filter cleaning device is configured to move the cleaning unit in a line curved along the curved shape of the filter. In the case where the filter curves in the height direction, the cleaning unit has the brush and the counter member which have a shape curved along the curved shape of the filter.

The filter cleaning device may be configured to move the filter in the width direction instead of the cleaning unit. For instance, the filter may be a belt rotatably wound over two axial rods, and the cleaning unit may be fixed at a position close to one of the rods. The rods may be parallel, respectively vertically extending and positioned at the same height position. Alternatively, the filter cleaning device may be configured to move both the filter and the cleaning unit such that the relative position of the brush relative to the filter moves along the width direction. In any case, it is preferable that the position of the brush unit in non-use state of the filter cleaning device is located at the vicinity of one end side of the device housing in the width direction.

The filter cleaning controller may be arranged separately from the rest part of the filter cleaning device. For instance, the filter cleaning controller may be arranged in the control box of the air-conditioner body, or an information processing unit disposed away from the air conditioner. The filter cleaning controller may communicate with the parts to be controlled by the filter cleaning controller by means of wire communication and/or wireless communication.

The filter cleaning device may be applied to an air-conditioner which is not ceiling-mounted duct type. For instance, in a case where the height of the air-conditioner needs to be supressed and it is difficult to have a look at the air-conditioner from the side or the above, the above-mentioned configuration of the filter cleaning device would be worthful.

While only selected embodiments and modifications have been chosen to illustrate the present invention, it will be apparent to those skilled in the art from this disclosure that various changes and further modifications can be made herein without departing from the scope of the invention as defined in the appended claims.

For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise.

The structures and functions of one embodiment can be adopted in another embodiment. It is not necessary for all advantages to be present in a particular embodiment at the same time. Thus, the foregoing descriptions of the embodiments according to the present invention are provided for illustration only.

### Reference list

- 100:: Inner air-conditioning unit
- 210:: Building Slab
- 220:: False Ceiling
- 221:: Inlet Grating
- 222:: Outlet Grating
- 223:: Inspection Door
- 310:: Air Inlet Duct
- 320:: Air Outlet Duct
- 400:: Filter Cleaning Device
- 401:: Body Side Port
- 402:: Duct Side Port
- 410:: Filter
- 411:: Filter Frame
- 412:: Mesh Sheet
- 420:: Device Housing
- 421:: Device Side Wall
- 422:: Cover Wall
- 423:: Guide Rail
- 424:: Racks
- 425: Opposite Side Wall
- 426:: Aperture
- 427:: Housing Bottom Surface
- 430:: Device-Side Control Box
- 441:: Exhaust Opening
- 442:: Hose
- 443:: Suction Socket
- 444:: Back-Side Part
- 461:: First Limit Switch
- 462:: Second Limit Switch
- 463:: Third Limit Switch
- 464:: Fourth Limit Switch
- 500:: Air-Conditioner Body
- 501:: Air Inlet Port
- 502:: Air Outlet Port
- 503:: Fan
- 504:: Heat Exchanger
- 520:: Air-Conditioner Housing
- 521:: Body Side Wall
- 530:: Body-Side Control Box
- 600:: Cleaning Unit
- 601:: Wheels
- 602:: Pinion Gear
- 620:: Brush Unit
- 621:: Brush-Side Casing
- 622, 662:: Inner Wall
- 623:: Machine Space
- 624:: Brush Space
- 625:: Gear Space
- 626:: Storage Space
- 627:: Brush-Side Opening
- 628:: Brush-Side Wall
- 629:: Controller-Side Wall
- 631:: First Motor
- 632:: Gear Mechanism
- 633:: Brush
- 634:: Comb
- 635:: Separation Roller
- 636:: Exhaust Port
- 640:: Cylinder Unit
- 641:: Transparent Part
- 642:: Storage Bottom Surface
- 643:: Storage Member
- 660:: Cylinder Unit
- 661:: Cylinder-Side Casing
- 663:: Cylinder-Side Machine Space
- 664:: Cylinder Space
- 665:: Cylinder-Side Gear Space
- 666:: Lower Space
- 667:: Cylinder-Side Opening
- 668:: Brush-facing Side
- 671:: Second Motor
- 672:: Cylinder-Side Gear Mechanism
- 673:: Cylinder
- 710:: Air-Conditioning Controller
- 720:: Position Sensor
- 730:: Driving Unit
- 740:: Information Storage Unit
- 750:: Filter Cleaning Controller

## Claims

1. A filter cleaning device (400) for an air-conditioner (500), comprising:
a flat filter (410) having a filter surface and configured to pass an air flow through the filter surface;
a brush unit (620) having a brush (633) and a storage member (643),
the brush being configured to contact with the filter surface, and
the storage member being disposed under the brush, configured to receive particles falling from the brush, and forming a bottom surface (642) of the brush unit;
a driving unit (730) configured to move the brush unit such that a relative position of the brush relative to the filter moves along a first moving axis which extends substantially horizontally and along the filter surface;
a controller (750) configured to control the driving unit such that the relative position of the brush unit moves from one end side to the other end side of the filter with respect to the first moving axis; and
a housing (420) accommodating the filter, the brush unit and the driving unit, a first hole (426) being formed within a bottom surface (427) of the housing;
wherein
the filter is fixed to a position with respect to the housing, and
the housing is configured such that the first hole is formed at a first position (471) adjacent to one end side of the filter with respect to the first moving axis,
**characterized in that**:
the storage member is of a transparent material (641);
the housing and storage member are formed such that the first hole of the housing is to be closed with the bottom surface of the storage member; and
the controller is configured to control the driving unit such that the storage member is located directly over the first hole in non-use state of the filter cleaning device.

2. The filter cleaning device according to claim 1, wherein
the storage member and housing are configured such that the storage member located at the first position closes the first hole by the bottom surface of the storage member.

3. The filter cleaning device according to claim 1 or 2, wherein
the first position is located at the vicinity of one end side of the housing with respect to the first moving axis.

4. The filter cleaning device according to any one of claims 1 to 3, wherein
the brush extends from one end side to the other end side of the filter with respect to a direction intersecting the first moving axis.

5. The filter cleaning device according to any one of claims 1 to 4, wherein
the driving unit is further configured to rotate the brush about a rotation axis that extends along the filter surface and intersects with the first moving axis.

6. The filter cleaning device according to any one of claims 1 to 5, wherein
the brush unit further has a comb-like member (634); and
the comb-like member is configured to comb bristles of the brush.

7. The filter cleaning device according to any one of claims 1 to 6, wherein
the housing is configured such that a second hole (441) is formed within a wall (421) of the housing; and
the storage member is configured such that a space (626) defined by the storage member communicates with an outside space of the housing via the second hole in a case that the brush unit is located at the first position.

8. An air-conditioner (500) having the filter cleaning device according to any one of claims 1 to 7.

## Patentansprüche

1. Filterreinigungsvorrichtung (400) für eine Klimaanlage (500) mit:
einem Flachfilter (410), der eine Filteroberfläche aufweist und konfiguriert ist, einem Luftstrom durch die Filteroberfläche zu leiten;
einer Bürsteneinheit (620) mit einer Bürste (633) und einem Speicherelement (643),
wobei die Bürste konfiguriert ist, die Filteroberfläche zu berühren, und
wobei das Speicherelement unter der Bürste angeordnet ist, konfiguriert ist, von der Bürste fallende Teilchen aufzunehmen, und eine Bodenfläche (642) der Bürsteneinheit bildet;
einer Antriebseinheit (730), die konfiguriert ist, die Bürsteneinheit so zu bewegen, dass sich eine Relativposition der Bürste relativ zum Filter längs einer ersten Bewegungsachse bewegt, die sich im Wesentlichen horizontal und längs der Filteroberfläche erstreckt;
einer Steuereinheit (750), die konfiguriert ist, die Antriebseinheit so zu steuern, dass sich die Relativposition der Bürsteneinheit in Bezug auf die erste Bewegungsachse von einer Endseite zur anderen Endseite des Filters bewegt; und
einem Gehäuse (420), das den Filter, die Bürsteneinheit und die Antriebseinheit beherbergt, wobei ein erstes Loch (426) in einer Bodenfläche (427) des Gehäuses ausgebildet ist;
wobei
der Filter in Bezug auf das Gehäuse an einer Position befestigt ist, und
das Gehäuse so konfiguriert ist, dass das erste Loch in Bezug auf die erste Bewegungsachse an einer ersten Position (471) benachbart zu einer Endseite des Filters ausgebildet ist,
**dadurch gekennzeichnet, dass**:
das Speicherelement aus einem transparenten Material (641) besteht;
das Gehäuse und das Speicherelement so ausgebildet sind, dass das erste Loch des Gehäuses mit der Bodenfläche des Speicherelements verschlossen werden soll; und
die Steuereinheit konfiguriert ist, die Antriebseinheit so zu steuern, dass das Speicherelement in einem Nichtgebrauchszustand der Filterreinigungsvorrichtung direkt über dem ersten Loch angeordnet ist.

2. Filterreinigungsvorrichtung nach Anspruch 1, wobei
das Speicherelement und Gehäuse so konfiguriert sind, dass das an der ersten Position angeordnete Speicherelement das erste Loch durch die Bodenfläche des Speicherelements verschließt.

3. Filterreinigungsvorrichtung nach Anspruch 1 oder 2, wobei sich in Bezug auf die erste Bewegungsachse die erste Position in der Nähe einer Endseite des Gehäuses befindet.

4. Filterreinigungsvorrichtung nach einem der Ansprüche 1 bis 3, wobei
sich die Bürste in Bezug auf eine Richtung, die die erste Bewegungsachse schneidet, von einer Endseite zur anderen Endseite des Filters erstreckt.

5. Filterreinigungsvorrichtung nach einem der Ansprüche 1 bis 4, wobei
die Antriebseinheit ferner konfiguriert ist, die Bürste um eine Drehachse zu drehen, die sich längs der Filteroberfläche erstreckt und sich mit der ersten Bewegungsachse schneidet.

6. Filterreinigungsvorrichtung nach einem der Ansprüche 1 bis 5, wobei
die Bürsteneinheit ferner ein kammartiges Element (634) aufweist; und
das kammartige Element konfiguriert ist, Borsten der Bürste zu kämmen.

7. Filterreinigungsvorrichtung nach einem der Ansprüche 1 bis 6, wobei
das Gehäuse so konfiguriert ist, dass ein zweites Loch (441) in einer Wand (421) des Gehäuses ausgebildet ist; und das Speicherelement so konfiguriert ist, dass in einem Fall, in dem sich die Bürsteneinheit an der ersten Position befindet, ein durch das Speicherelement definierter Raum (626) mit einem Außenraum des Gehäuses über das zweite Loch in Verbindung steht.

8. Klimaanlage (500), die die Filterreinigungsvorrichtung nach einem der Ansprüche 1 bis 7 aufweist.

## Revendications

1. Dispositif de nettoyage de filtre (400) pour un climatiseur (500), comprenant :
un filtre plat (410) présentant une surface filtrante et prévu pour la traversée de la surface filtrante par un flux d'air ;
une unité de brossage (620) pourvue d'une brosse (633) et d'un élément de stockage (643),
la brosse étant prévue pour être en contact avec la surface filtrante, et
l'élément de stockage étant disposé sous la brosse, prévu pour recevoir des particules tombant de la brosse, et formant une surface de fond (642) de l'unité de brossage ;
une unité d'entraînement (730) prévue pour mouvoir l'unité de brossage de manière à déplacer une position relative de la brosse par rapport au filtre le long d'un premier axe de déplacement s'étendant sensiblement horizontalement et le long de la surface filtrante ;
un contrôleur (750) prévu pour commander l'unité d'entraînement de manière à déplacer la position relative de l'unité de brossage d'un côté d'extrémité à l'autre côté d'extrémité du filtre par rapport au premier axe de déplacement ; et
un boîtier (420) recevant le filtre, l'unité de brossage et l'unité d'entraînement, un premier trou (426) étant formé dans une surface de fond (427) du boîtier ;
où
le filtre est fixé à un emplacement par rapport au boîtier, et
le boîtier est prévu de telle manière que le premier trou est formé à un premier emplacement (471) adjacent à un côté d'extrémité du filtre par rapport au premier axe de déplacement,
**caractérisé en ce que** :
l'élément de stockage est en matériau transparent (641) ;
le boîtier et l'élément de stockage sont formés de telle manière que le premier trou du boîtier est proche de la surface de fond de l'élément de stockage ; et
le contrôleur est prévu pour commander l'unité d'entraînement de telle manière que l'élément de stockage est situé directement au-dessus du premier trou en état de non-utilisation du dispositif de nettoyage de filtre.

2. Dispositif de nettoyage de filtre selon la revendication 1, où
l'élément de stockage et le boîtier sont prévus de telle manière que l'élément de stockage situé sur le premier emplacement ferme le premier trou par la surface de fond de l'élément de stockage.

3. Dispositif de nettoyage de filtre selon la revendication 1 ou la revendication 2, où
le premier emplacement est situé à proximité d'un côté d'extrémité du boîtier par rapport au premier axe de déplacement.

4. Dispositif de nettoyage de filtre selon l'une des revendications 1 à 3, où
la brosse s'étend d'un côté d'extrémité à l'autre côté d'extrémité du filtre par rapport à une direction croisant le premier axe de déplacement.

5. Dispositif de nettoyage de filtre selon l'une des revendications 1 à 4, où
l'unité d'entraînement est en outre prévue pour tourner la brosse autour d'un axe de rotation s'étendant le long de la surface filtrante et croisant le premier axe de déplacement.

6. Dispositif de nettoyage de filtre selon l'une des revendications 1 à 5, où
l'unité de brossage est en outre pourvue d'un élément en forme de peigne (634) ; et
l'élément en forme de peigne est prévu pour peigner les soies de la brosse.

7. Dispositif de nettoyage de filtre selon l'une des revendications 1 à 6, où
le boîtier est prévu de telle manière qu'un deuxième trou (441) est formé à l'intérieur d'une paroi (421) du boîtier ; et
l'élément de stockage est prévu de telle manière qu'un espace (626) défini par l'élément de stockage communique avec un espace extérieur du boîtier par le deuxième trou dans le cas où l'unité de brossage est située sur le premier emplacement.

8. Climatiseur (500), pourvu du dispositif de nettoyage de filtre selon l'une des revendications 1 à 7.
